# EUROPEAN PATENT APPLICATION

(11) **EP 4 797 733 A1**
(43) Date of publication of application: **26.08.2026**
(21) Application number: 24884186.8
(22) Date of filing: 27.08.2024
(51) Int. Cl.: H04W 4/02, H04W 24/10, H04W 4/38

(54) **SENSING METHOD AND RELATED APPARATUS**

(30) Priority: 31.10.2023 CN 202311436599
(71) Applicant: HUAWEI TECHNOLOGIES CO., LTD., Shenzhen 518129 (CN)
(72) Inventor: ZHU, Ningbo, Shenzhen, Guangdong 518129 (CN); MA, Chuan, Shenzhen, Guangdong 518129 (CN); HAO, Jinping, Shenzhen, Guangdong 518129 (CN)
(74) Representative: Maiwald GmbH
(86) International application number: PCT/CN2024/114736
(87) International publication number: WO 2025/092179

(57) **Abstract**

A sensing method and a related apparatus are provided. The method is applicable to a terminal device and includes: receiving a first identifier from a first access network device, where the first identifier identifies a target sensing area; and if the terminal device supports the first identifier, performing a sensing procedure, where the terminal device is located in the target sensing area. This allows the first access network device to enable the terminal device to provide a sensing service for performing the sensing procedure, thereby achieving sensing of the target sensing area.

## Description

This application claims priority to Chinese Patent Application No. 202311436599.9, filed with the China National Intellectual Property Administration on October 31, 2023 and entitled "SENSING METHOD AND RELATED APPARATUS", which is incorporated herein by reference in its entirety.

### TECHNICAL FIELD

This application relates to the field of communication technologies, and in particular, to a sensing method and a related apparatus.

### BACKGROUND

The integration of wireless communication and sensing is one of key technologies for 5th generation (5th generation, 5G) mobile communication, and may be widely applied in typical scenarios such as smart transportation, smart low-altitude domains, and smart networks. This integration implements a unified design for communication functions and sensing functions through joint signal design, hardware sharing, and the like. Within this context, sensing may be understood as a wireless sensing technology based on a communication system. For example, a base station transmits a radio signal to a target object and receives an echo signal reflected by the target object. By analyzing the echo signal, the base station obtains a corresponding sensing measurement, for example, a quantity of target objects, their locations, moving speeds, and identity identification.

Currently, there are mainly two types of sensing scenarios: per-area (per-area) sensing and per-object (per-object) sensing. In the per-area sensing scenario, a sensing function entity may receive a sensing request that includes area information or location information of a target sensing area. The sensing function entity may then select a corresponding base station, which may carry out a sensing procedure with the assistance of a terminal device.

However, in some scenarios where terminal device involvement is needed for an area-based sensing service, the network side may lack information about which terminal device is capable of participating in sensing. Therefore, it is crucial to determine how a network device should enable a terminal device that is capable of providing a sensing service in the sensing area to perform a sensing procedure.

### SUMMARY

This application provides a sensing method and a related apparatus, for a terminal device to receive a first identifier from a first access network device. If the terminal device supports the first identifier, it proceeds to perform a sensing procedure.

A first aspect of this application provides a sensing method. The method is performed by a terminal device, or the method is performed by a part of components (for example, a processor, a chip, or a chip system) in the terminal device, or the method may be implemented by a logical module or software that can implement all or part of functions of the terminal device. In the first aspect and possible implementations thereof, an example in which the method is performed by the terminal device is used for description. The method includes: The terminal device receives a first identifier from a first access network device, where the first identifier identifies a target sensing area, and/or the first identifier identifies a first sensing service. If the terminal device supports the first identifier, the terminal device performs a sensing procedure. In this way, the first access network device enables the terminal device to provide a sensing service for performing a sensing procedure.

Based on the first aspect, in a possible implementation, the terminal device is located in the target sensing area. In this way, the first access network device enables the terminal device in the target sensing area to perform the sensing procedure.

Based on the first aspect, in a possible implementation, the first identifier identifies the target sensing area, and the first identifier further identifies the first sensing service; and that the terminal device performs the sensing procedure includes: The terminal device performs a sensing procedure corresponding to the first sensing service. In this implementation, the first identifier may further identify a specific sensing service, so that the first access network device enables the terminal device to perform a sensing procedure corresponding to the specific sensing service, and the first sensing service in the target sensing area is performed.

Based on the first aspect, in a possible implementation, before the terminal device receives the first identifier from the first access network device, the method further includes: The terminal device receives, from a core network device, at least one identifier supported by the terminal device, where each of the at least one identifier supported by the terminal device identifies a specific sensing area, and/or each of the at least one identifier supported by the terminal device identifies a specific sensing service. In this implementation, the terminal device may configure, via the core network device, the at least one identifier supported by the terminal device, so that the terminal device determines whether the first identifier is supported. This helps the first access network device enable a proper terminal device to assist the first access network device in performing the sensing procedure.

Based on the first aspect, in a possible implementation, each of the at least one identifier identifies a specific sensing area, and each of the at least one identifier further identifies a specific sensing service. In this implementation, each identifier further identifies a specific sensing service. In this way, the terminal device performs a sensing procedure of the specific sensing service with reference to the first identifier.

Based on the first aspect, in a possible implementation, that the terminal device receives, from the core network device, the at least one identifier supported by the terminal device includes: The terminal device receives, from a unified data management function entity via an access and mobility management function entity, the at least one identifier supported by the terminal device. Alternatively, the terminal device receives, from a sensing function entity, the at least one identifier supported by the terminal device. In this implementation, the at least one identifier supported by the terminal device may be configured for the terminal device via the unified data management function entity or the sensing function entity, so that the terminal device determines whether the first identifier is supported by the terminal device.

Based on the first aspect, in a possible implementation, the method further includes: The terminal device receives, from the first access network device, at least one identifier supported by the first access network device. The terminal device sends a first set to the sensing function entity, where the first set includes at least one identifier supported by both the first access network device and the terminal device. In this way, the sensing function entity obtains the first set. If the first set includes the first identifier, the sensing function entity may indicate the first access network device to enable the terminal device to provide a sensing service for performing a sensing procedure.

Based on the first aspect, in a possible implementation, before the terminal device receives the first identifier from the first access network device, the method further includes: The terminal device sends sensing capability information of the terminal device to the sensing function entity. In this way, the sensing function entity configures the at least one identifier for the terminal device, so that the first access network device enables the terminal device to perform a sensing procedure of a corresponding sensing area.

Based on the first aspect, in a possible implementation, the first identifier is carried in a paging message, a system message, or a radio resource control (radio resource control, RRC) message. In this implementation, the first access network device may broadcast the first identifier by using the paging message or the system message, so as to select a proper terminal device to implement the sensing procedure. Alternatively, the first access network device may send the first identifier to the terminal device by using the RRC message. In this way, the terminal device performs the sensing procedure.

Based on the first aspect, in a possible implementation, if the first identifier identifies the target sensing area, but does not identify the first sensing service, the method further includes: The terminal device receives service information of the target sensing area from the first access network device, where the service information of the target sensing area includes the first sensing service. In this way, the first access network device enables the terminal device to perform the sensing procedure corresponding to the first sensing service, and the first sensing service in the target sensing area is performed.

Based on the first aspect, in a possible implementation, if the first identifier identifies the first sensing service, but does not identify the target sensing area, the method further includes: The terminal device receives area information of the target sensing area from the first access network device. In this way, the first sensing service in the target sensing area is performed.

A second aspect of this application provides a sensing method. The method is performed by a first access network device, or the method is performed by a part of components (for example, a processor, a chip, or a chip system) in the first access network device, or the method may be implemented by a logical module or software that can implement all or part of functions of the first access network device. In the second aspect and possible implementations thereof, an example in which the method is performed by the first access network device is used for description. The method includes: The first access network device receives a first sensing request from a sensing function entity, where the first sensing request includes a first identifier, the first identifier identifies a target sensing area, and/or the first identifier identifies a first sensing service, and the first sensing request is used to request to perform a sensing procedure. The first access network device sends the first identifier to a terminal device. In this way, the first access network device enables the terminal device to provide a sensing service for performing a sensing procedure.

Based on the second aspect, in a possible implementation, the terminal device is located in the target sensing area. In this way, the first access network device enables the terminal device in the target sensing area to perform the sensing procedure.

Based on the second aspect, in a possible implementation, before the first access network device sends the first identifier to the terminal device, the method further includes: The first access network device determines, based on a first mapping relationship, the target sensing area corresponding to the first identifier, where the first mapping relationship includes a mapping relationship between at least one identifier supported by the first access network device and sensing area information, each of the at least one identifier identifies a specific sensing area, and the first identifier belongs to the at least one identifier. In this implementation, the first mapping relationship is preconfigured in the first access network device, so that the first access network device determines the target sensing area corresponding to the first identifier. This helps the first access network device send the first identifier in the target sensing area, so as to enable a proper terminal device to assist in implementing sensing.

Based on the second aspect, in a possible implementation, each of the at least one identifier further identifies a specific sensing service. In this implementation, each identifier further identifies a specific sensing service. In this way, the first access network device enables a proper terminal device with reference to the first identifier, and performs a sensing procedure of the specific sensing service with the terminal device.

Based on the second aspect, in a possible implementation, the method further includes: The first access network device receives the first mapping relationship from a core network device or a gateway device. In this way, the first mapping relationship is configured for the first access network device.

Based on the second aspect, in a possible implementation, the core network device is a sensing function entity or an access and mobility management function entity.

Based on the second aspect, in a possible implementation, the first sensing request further includes an identifier of the terminal device. In this implementation, the sensing function entity may indicate, by using the identifier of the terminal device, that the first access network device may implement sensing with assistance of the terminal device. In this way, the first access network device accurately selects the terminal device, and implements the sensing procedure via the terminal device.

Based on the second aspect, in a possible implementation, the first identifier identifies the target sensing area, and the first identifier further identifies the first sensing service. In this implementation, the first identifier may further identify a specific sensing service, so that the first access network device enables the terminal device to perform a sensing procedure of the specific sensing service, and the first sensing service in the target sensing area is performed.

Based on the second aspect, in a possible implementation, the first sensing request further includes at least one of the following: area information of the target sensing area, service information of the target sensing area, a sensing type corresponding to the first sensing service, sensing time, or a sensing accuracy requirement. In this way, the first access network device determines the sensing service and some sensing requirements with reference to the first sensing request, to implement better sensing to provide a corresponding sensing result.

Based on the second aspect, in a possible implementation, that the first access network device sends the first identifier to the terminal device includes: The first access network device sends a system message, a paging message, or an RRC message to the terminal device, where the system message, the paging message, or the RRC message includes the first identifier. In this implementation, the first access network device may broadcast the first identifier by using the paging message or the system message, so as to select a proper terminal device to implement the sensing procedure. Alternatively, the first access network device may send the first identifier to the terminal device by using the RRC message. In this way, the terminal device performs the sensing procedure.

Based on the second aspect, in a possible implementation, if the first identifier identifies the target sensing area, but does not identify the first sensing service, the method further includes: The first access network device sends the service information of the target sensing area to the terminal device, where the service information of the target sensing area includes the first sensing service. In this way, the first access network device enables a proper terminal device to perform a sensing procedure corresponding to the first sensing service, and the first sensing service in the target sensing area is performed.

Based on the second aspect, in a possible implementation, if the first identifier identifies the first sensing service, but does not identify the target sensing area, the method further includes: The first access network device sends the area information of the target sensing area to the terminal device. In this way, the first sensing service in the target sensing area is performed.

A third aspect of this application provides a sensing method. The method is performed by a sensing function entity, or the method is performed by a part of components (for example, a processor, a chip, or a chip system) in the sensing function entity, or the method may be implemented by a logical module or software that can implement all or part of the sensing function entity. In the third aspect and possible implementations thereof, an example in which the method is performed by the sensing function entity is used for description. The method includes: The sensing function entity sends a first sensing request to a first access network device, where the first sensing request includes a first identifier, the first identifier identifies a target sensing area, and/or the first identifier identifies a first sensing service, and the first sensing request is used to request to perform a sensing procedure. In this way, the first access network device enables a proper terminal device to provide a sensing service for performing a sensing procedure.

Based on the third aspect, in a possible implementation, before the sensing function entity sends the first sensing request to the first access network device, the method further includes: The sensing function entity determines the first identifier. In this way, the sensing function entity selects a proper access network device based on the first identifier to implement the sensing procedure.

Based on the third aspect, in a possible implementation, the first identifier corresponds to the first access network device.

Based on the third aspect, in a possible implementation, the first sensing request includes an identifier of the first access network device.

Based on the third aspect, in a possible implementation, the first identifier identifies the target sensing area, and the first identifier further identifies the first sensing service. In this implementation, the first identifier may further identify a specific sensing service, so that the first access network device enables a proper terminal device to perform a sensing procedure of the specific sensing service, and the first sensing service in the target sensing area is performed.

Based on the third aspect, in a possible implementation, the first sensing request further includes at least one of the following: area information of the target sensing area, service information of the target sensing area, a sensing type corresponding to the first sensing service, sensing time, or a sensing accuracy requirement. In this way, the first access network device determines the sensing service and some sensing requirements with reference to the first sensing request, to implement better sensing to provide a corresponding sensing result.

Based on the third aspect, in a possible implementation, that the sensing function entity determines the first identifier includes: The sensing function entity receives a second sensing request, where the second sensing request includes the first identifier, and the second sensing request is used to request to perform the sensing procedure. In this way, the sensing function entity obtains the first identifier, and sends the first sensing request to the first access network device, so that the first access network device enables a proper terminal device to implement the sensing procedure by using the first identifier.

Based on the third aspect, in a possible implementation, that the sensing function entity determines the first identifier includes: The sensing function entity receives a third sensing request, where the third sensing request includes the area information of the target sensing area and/or the service information of the target sensing area, and the third sensing request is used to request to perform the sensing procedure. The sensing function entity determines, based on a second mapping relationship, the first identifier corresponding to the area information of the target sensing area, where the second mapping relationship includes a mapping relationship between area information of at least one sensing area and at least one identifier, and the at least one identifier is an identifier supported by an access network device in the at least one sensing area. Alternatively, the sensing function entity determines, based on a second mapping relationship, the first identifier corresponding to the service information of the target sensing area, where the second mapping relationship includes a mapping relationship between at least one piece of service information and at least one identifier, and the at least one identifier is an identifier supported by an access network device in at least one sensing area. Alternatively, the sensing function entity determines, based on a second mapping relationship, the first identifier corresponding to both the area information of the target sensing area and the service information of the target sensing area, where the second mapping relationship includes a mapping relationship between at least one identifier and a combination of area information of at least one sensing area and at least one piece of service information, and the at least one identifier is an identifier supported by an access network device in the at least one sensing area. In this way, the sensing function entity obtains the first identifier, and sends the first sensing request to the first access network device, so that the first access network device enables a proper terminal device to implement the sensing procedure by using the first identifier.

Based on the third aspect, in a possible implementation, the method further includes: The sensing function entity receives the second mapping relationship from an access and mobility management function entity. In this way, the sensing function entity determines the first identifier, and implementation of the solution is implemented.

Based on the third aspect, in a possible implementation, before the sensing function entity sends the first sensing request to the first access network device, the method further includes: The sensing function entity determines, based on a third mapping relationship, the first access network device corresponding to the first identifier, where the third mapping relationship includes a mapping relationship between at least one identifier and an access network device, and the at least one identifier is an identifier supported by an access network device in the at least one sensing area. In this way, the sensing function entity selects a proper first access network device, to implement the sensing procedure.

Based on the third aspect, in a possible implementation, the method further includes: The sensing function entity receives the third mapping relationship from a core network device or a gateway device.

Based on the third aspect, in a possible implementation, the first sensing request further includes an identifier of the terminal device, and the terminal device is configured to perform the sensing procedure. In this implementation, the sensing function entity may indicate, by using the identifier of the terminal device, that the first access network device may implement sensing with assistance of the terminal device. In this way, the first access network device accurately selects the terminal device, and implements the sensing procedure via the terminal device.

Based on the third aspect, in a possible implementation, before the sensing function entity sends the first sensing request to the first access network device, the method further includes: The sensing function entity receives a first set from the terminal device, where the first set includes at least one identifier supported by both the first access network device and the terminal device. This helps the sensing function entity indicate the terminal device to the first access network device, so that the first access network device enables the terminal device to perform the sensing procedure. The target sensing area is sensed.

Based on the third aspect, in a possible implementation, the method further includes: The sensing function entity receives sensing capability information from the terminal device. In this way, the sensing function entity configures the at least one identifier for the terminal device, so that the first access network device enables the terminal device to perform a sensing procedure of a corresponding sensing area.

Based on the third aspect, in a possible implementation, if the first identifier identifies the target sensing area, but does not identify the first sensing service, the method further includes: The sensing function entity sends the service information of the target sensing area to the first access network device. In this way, the first access network device enables a proper terminal device to perform a sensing procedure corresponding to the first sensing service, and the first sensing service in the target sensing area is performed.

Based on the third aspect, in a possible implementation, if the first identifier identifies the first sensing service, but does not identify the target sensing area, the method further includes: The sensing function entity sends the area information of the target sensing area to the first access network device. In this way, the first access network device enables a proper terminal device to perform a sensing procedure corresponding to the first sensing service, and the first sensing service in the target sensing area is performed.

A fourth aspect of this application provides a communication apparatus, including:
a transceiver module, configured to receive a first identifier from a first access network device, where the first identifier identifies a target sensing area, and/or the first identifier identifies a first sensing service; and
a processing module, configured to perform a sensing procedure if the communication apparatus supports the first identifier.

Based on the fourth aspect, in a possible implementation, the communication apparatus is located in the target sensing area.

Based on the fourth aspect, in a possible implementation, the first identifier identifies the target sensing area, and the first identifier further identifies the first sensing service; and the processing module is specifically configured to perform a sensing procedure corresponding to the first sensing service.

Based on the fourth aspect, in a possible implementation, the transceiver module is further configured to receive, from a core network device, at least one identifier supported by the communication apparatus, where each of the at least one identifier supported by the communication apparatus identifies a specific sensing area, and/or each of the at least one identifier supported by the communication apparatus identifies a specific sensing service.

Based on the fourth aspect, in a possible implementation, each of the at least one identifier identifies a specific sensing area, and each of the at least one identifier further identifies a specific sensing service.

Based on the fourth aspect, in a possible implementation, the transceiver module is specifically configured to: receive, from a unified data management function entity via an access and mobility management function entity, the at least one identifier supported by the communication apparatus; or receive, from a sensing function entity, the at least one identifier supported by the communication apparatus.

Based on the fourth aspect, in a possible implementation, the transceiver module is further configured to: receive, from the first access network device, at least one identifier supported by the first access network device; and send a first set to the sensing function entity, where the first set includes at least one identifier supported by both the first access network device and the communication apparatus.

Based on the fourth aspect, in a possible implementation, the transceiver module is further configured to send sensing capability information of the communication apparatus to the sensing function entity.

Based on the fourth aspect, in a possible implementation, the first identifier is carried in a paging message, a system message, or an RRC message.

Based on the fourth aspect, in a possible implementation, if the first identifier identifies the target sensing area, but does not identify the first sensing service, the transceiver module is further configured to receive service information of the target sensing area from the first access network device, where the service information of the target sensing area includes the first sensing service.

Based on the fourth aspect, in a possible implementation, if the first identifier identifies the first sensing service, but does not identify the target sensing area, the transceiver module is further configured to receive area information of the target sensing area from the first access network device.

A fifth aspect of this application provides a communication apparatus, including:
a transceiver module, configured to: receive a first sensing request from a sensing function entity, where the first sensing request includes a first identifier, the first identifier identifies a target sensing area, and/or the first identifier identifies a first sensing service, and the first sensing request is used to request to perform a sensing procedure; and send the first identifier to a terminal device.

Based on the fifth aspect, in a possible implementation, the terminal device is located in the target sensing area.

Based on the fifth aspect, in a possible implementation, the communication apparatus further includes a processing module. The processing module is configured to determine, based on a first mapping relationship, the target sensing area corresponding to the first identifier, where the first mapping relationship includes a mapping relationship between at least one identifier supported by the communication apparatus and sensing area information, each of the at least one identifier identifies a specific sensing area, and the first identifier belongs to the at least one identifier.

Based on the fifth aspect, in a possible implementation, each of the at least one identifier further identifies a specific sensing service.

Based on the fifth aspect, in a possible implementation, the transceiver module is further configured to receive the first mapping relationship from a core network device or a gateway device.

Based on the fifth aspect, in a possible implementation, the core network device is a sensing function entity or an access and mobility management function entity.

Based on the fifth aspect, in a possible implementation, the first sensing request further includes an identifier of the terminal device.

Based on the fifth aspect, in a possible implementation, the first identifier identifies the target sensing area, and the first identifier further identifies the first sensing service.

Based on the fifth aspect, in a possible implementation, the first sensing request further includes at least one of the following: area information of the target sensing area, service information of the target sensing area, a sensing type corresponding to the first sensing service, sensing time, or a sensing accuracy requirement.

Based on the fifth aspect, in a possible implementation, the transceiver module is specifically configured to send a system message, a paging message, or an RRC message to the terminal device, where the system message, the paging message, or the RRC message includes the first identifier.

Based on the fifth aspect, in a possible implementation, if the first identifier identifies the target sensing area, but does not identify the first sensing service, the transceiver module is further configured to send the service information of the target sensing area to the terminal device, where the service information of the target sensing area includes the first sensing service.

Based on the fifth aspect, in a possible implementation, if the first identifier identifies the first sensing service, but does not identify the target sensing area, the transceiver module is further configured to send the area information of the target sensing area to the terminal device.

A sixth aspect of this application provides a communication apparatus, including:
a transceiver module, configured to send a first sensing request to a first access network device, where the first sensing request includes a first identifier, the first identifier identifies a target sensing area, and/or the first identifier identifies a first sensing service, and the first sensing request is used to request to perform a sensing procedure.

Based on the sixth aspect, in a possible implementation, the communication apparatus further includes a processing module. The processing module is configured to determine the first identifier.

Based on the sixth aspect, in a possible implementation, the first identifier corresponds to the first access network device.

Based on the sixth aspect, in a possible implementation, the first sensing request includes an identifier of the first access network device.

Based on the sixth aspect, in a possible implementation, the first identifier identifies the target sensing area, and the first identifier further identifies the first sensing service.

Based on the sixth aspect, in a possible implementation, the first sensing request further includes at least one of the following: area information of the target sensing area, service information of the target sensing area, a sensing type corresponding to the first sensing service, sensing time, or a sensing accuracy requirement.

Based on the sixth aspect, in a possible implementation, the processing module is specifically configured to receive a second sensing request, where the second sensing request includes the first identifier, and the second sensing request is used to request to perform the sensing procedure.

Based on the sixth aspect, in a possible implementation, the processing module is specifically configured to: receive a third sensing request, where the third sensing request includes the area information of the target sensing area and/or the service information of the target sensing area, and the third sensing request is used to request to perform the sensing procedure; and determine, based on a second mapping relationship, the first identifier corresponding to the area information of the target sensing area, where the second mapping relationship includes a mapping relationship between area information of at least one sensing area and at least one identifier, and the at least one identifier is an identifier supported by an access network device in the at least one sensing area; or determine, based on a second mapping relationship, the first identifier corresponding to the service information of the target sensing area, where the second mapping relationship includes a mapping relationship between at least one piece of service information and at least one identifier, and the at least one identifier is an identifier supported by an access network device in at least one sensing area; or determine, based on a second mapping relationship, the first identifier corresponding to both the area information of the target sensing area and the service information of the target sensing area, where the second mapping relationship includes a mapping relationship between at least one identifier and a combination of area information of at least one sensing area and at least one piece of service information, and the at least one identifier is an identifier supported by an access network device in the at least one sensing area.

Based on the sixth aspect, in a possible implementation, the transceiver module is further configured to receive the second mapping relationship from an access and mobility management function entity.

Based on the sixth aspect, in a possible implementation, the processing module is further configured to determine, based on a third mapping relationship, the first access network device corresponding to the first identifier, where the third mapping relationship includes a mapping relationship between at least one identifier and an access network device, and the at least one identifier is an identifier supported by an access network device in the at least one sensing area.

Based on the sixth aspect, in a possible implementation, the transceiver module is further configured to receive the third mapping relationship from a core network device or a gateway device.

Based on the sixth aspect, in a possible implementation, the first sensing request further includes an identifier of the terminal device, and the terminal device is configured to perform the sensing procedure.

Based on the sixth aspect, in a possible implementation, the transceiver module is further configured to receive a first set from the terminal device, where the first set includes at least one identifier supported by both the first access network device and the terminal device.

Based on the sixth aspect, in a possible implementation, the transceiver module is further configured to receive sensing capability information from the terminal device.

Based on the sixth aspect, in a possible implementation, if the first identifier identifies the target sensing area, but does not identify the first sensing service, the transceiver module is further configured to send the service information of the target sensing area to the first access network device.

Based on the sixth aspect, in a possible implementation, if the first identifier identifies the first sensing service, but does not identify the target sensing area, the transceiver module is further configured to send the area information of the target sensing area to the first access network device.

A seventh aspect of this application provides a communication apparatus. The communication apparatus may be a terminal device, or may be a module or a unit (for example, a chip, a chip system, or a circuit) that is in the terminal device and that performs, in one-to-one correspondence, the method, the operations, the steps, or the actions described in the first aspect, or may be a communication apparatus that can be used in a matching manner with the terminal device.

An eighth aspect of this application provides a communication apparatus. The communication apparatus may be a first access network device, or may be a module or a unit (for example, a chip, a chip system, or a circuit) that is in the first access network device and that performs, in one-to-one correspondence, the method, the operations, the steps, or the actions described in the second aspect, or may be a communication apparatus that can be used in a matching manner with the first access network device.

A ninth aspect of this application provides a communication apparatus. The communication apparatus may be a sensing function entity, or may be a module or a unit (for example, a chip, a chip system, or a circuit) that is in the sensing function entity and that performs, in one-to-one correspondence, the method, the operations, the steps, or the actions described in the third aspect, or may be a communication apparatus that can be used in a matching manner with the sensing function entity.

A tenth aspect of this application provides a communication apparatus. The communication apparatus includes a processor. The processor is configured to invoke a computer program or computer instructions in a memory, to enable the processor to be configured to perform any one of the implementations of the first aspect, the second aspect, or the third aspect.

Optionally, the communication apparatus further includes a transceiver. The processor is configured to control the transceiver to perform any one of the implementations of the first aspect, the second aspect, or the third aspect.

Optionally, the processor is integrated with the memory.

An eleventh aspect of this application provides a computer program product including computer instructions. When the computer program product runs on a computer, the computer is enabled to perform any one of the implementations of any one of the first aspect to the third aspect.

A twelfth aspect of this application provides a computer-readable storage medium, including computer instructions. When the computer instructions are run on a computer, the computer is enabled to perform any one of the implementations of any one of the first aspect to the third aspect.

A thirteenth aspect of this application provides a chip apparatus, including a processor, configured to invoke a computer program or computer instructions in a memory, to enable the processor to perform any one of the implementations of any one of the first aspect to the third aspect.

Optionally, the processor is coupled to the memory through an interface.

A fourteenth aspect of this application provides a communication system. The communication system includes the communication apparatus according to the fifth aspect and the communication apparatus according to the sixth aspect.

Optionally, the communication system further includes the communication apparatus according to the fourth aspect.

It can be learned from the foregoing technical solutions that this application provides a sensing method, and the method is applicable to a terminal device. The terminal device receives a first identifier from a first access network device, where the first identifier identifies a target sensing area, and/or the first identifier identifies a first sensing service. If the terminal device supports the first identifier, the terminal device performs a sensing procedure. It can be learned that the terminal device determines whether the first identifier is supported. If the terminal device supports the first identifier, the terminal device performs the sensing procedure. In this way, the first access network device enables the terminal device to provide a sensing service for performing a sensing procedure.

### BRIEF DESCRIPTION OF DRAWINGS

FIG. 1 is a diagram of a possible scenario of terminal device-assisted sensing according to an embodiment of this application;
FIG. 2 is a diagram of another possible scenario of terminal device-assisted sensing according to an embodiment of this application;
FIG. 3 is a diagram of a communication system according to an embodiment of this application;
FIG. 4 is a diagram of an embodiment of a sensing method according to an embodiment of this application;
FIG. 5 is a diagram of another embodiment of a sensing method according to an embodiment of this application;
FIG. 6 is a diagram of another embodiment of a sensing method according to an embodiment of this application;
FIG. 7 is a diagram of another embodiment of a sensing method according to an embodiment of this application;
FIG. 8 is a diagram of another embodiment of a sensing method according to an embodiment of this application;
FIG. 9 is a diagram of another embodiment of a sensing method according to an embodiment of this application;
FIG. 10 is a diagram of another embodiment of a sensing method according to an embodiment of this application;
FIG. 11 is a diagram of a structure of a communication apparatus according to an embodiment of this application;
FIG. 12 is a diagram of another structure of a communication apparatus according to an embodiment of this application;
FIG. 13 is a diagram of still another structure of a communication apparatus according to an embodiment of this application;
FIG. 14 is a diagram of still another structure of a communication apparatus according to an embodiment of this application; and
FIG. 15 is a diagram of still another structure of a communication apparatus according to an embodiment of this application.

### DESCRIPTION OF EMBODIMENTS

Embodiments of this application provide a sensing method and a related apparatus, for a terminal device to receive a first identifier from a first access network device. If the terminal device supports the first identifier, the terminal device performs a sensing procedure.

The following clearly and completely describes the technical solutions in embodiments of this application with reference to the accompanying drawings in embodiments of this application. It is clear that the described embodiments are merely a part but not all of embodiments of this application. All other embodiments obtained by persons skilled in the art based on embodiments of this application without creative efforts shall fall within the protection scope of this application.

The term "and/or" in this application describes only an association relationship between associated objects, and indicates that three relationships may exist. For example, A and/or B may indicate the following three cases: Only A exists, both A and B exist, and only B exists. In addition, the character "/" in this application generally indicates an "or" relationship between the associated objects.

The integration of wireless communication and sensing is one of key technologies for 5G communication, and may be widely applied in typical scenarios such as smart transportation, smart low-altitude domains, and smart networks. This integration implements a unified design for communication functions and sensing functions through joint signal design, hardware sharing, and the like. Within this context, sensing may be understood as a wireless sensing technology based on a communication system. For example, a base station transmits a radio signal to a target object and receives an echo signal reflected by the target object. By analyzing the echo signal, the base station obtains a corresponding sensing measurement, for example, a quantity of target objects, their locations, moving speeds, and identity identification.

Currently, there are mainly two types of sensing scenarios: per-area sensing and per-object sensing. Per-area sensing refers to sensing for a specific area, for example, in a low altitude in a city, a road, a factory, or another scenario. Typical application scenarios include: locating and detecting, at a low altitude in a city, whether an uncrewed aerial vehicle intrudes into a regulatory scope, so as to implement uncrewed aerial vehicle intrusion detection oriented to a fixed area; detecting a moving path and a moving speed of a vehicle on a city road in real time, and sensing a running status of a highway; performing breathing detection, fitness monitoring, gesture or posture identification, and the like by sensing a channel change; using a relationship between signal attenuation and a weather indicator in a communication link to obtain the corresponding weather indicator through analysis, and perform weather detection; and the like. Per-object sensing is to sense and track an object by using the integrated communication and sensing technology when the object has an identifier, to implement dynamic detection of the object.

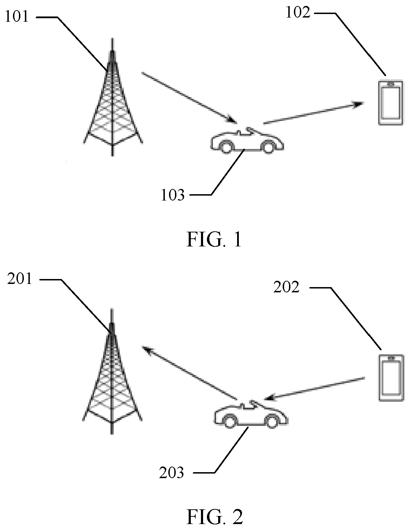

The sensing method mainly includes base station side sensing, terminal device-assisted sensing, and terminal device side sensing. The following describes two possible sensing scenarios of terminal device-assisted sensing in this application with reference to FIG. 1 and FIG. 2.

FIG. 1 is a diagram of a possible scenario of terminal device-assisted sensing according to an embodiment of this application. As shown in FIG. 1, a base station 101 transmits a signal, and the signal is reflected by a car 103 to obtain a sensing signal. A terminal device 102 receives the sensing signal, and measures the sensing signal to obtain a sensing result. The terminal device 102 may report the sensing result to a sensing function entity.

FIG. 2 is a diagram of another possible scenario of terminal device-assisted sensing according to an embodiment of this application. As shown in FIG. 2, a terminal device 202 transmits a signal, and the signal is reflected by a car 203 to obtain a sensing signal. A base station 201 receives the sensing signal, and measures the sensing signal to obtain a sensing result. The base station 201 may report the sensing result to a sensing function entity.

It should be noted that FIG. 1 and FIG. 2 are merely two examples of a terminal device-assisted sensing scenario. The terminal device-assisted sensing scenario is not limited in this application. Provided that the terminal device can be triggered to measure a sensing signal and report a sensing result, any scenario in which the terminal device can help a sensing procedure may be the terminal device-assisted sensing scenario mentioned in this application. This is not specifically limited in this application.

In the terminal device-assisted sensing scenario, the sensing function entity may receive a sensing request that includes area information or location information of a target sensing area. The sensing function entity may then select a proper base station and terminal device, which may carry out the sensing procedure with the assistance of a terminal device. For an area sensing service in which a terminal device participates, the base station obtains only the area information or the location information of the target sensing area from the sensing request, but lacks information about which terminal device is capable of participating in sensing. Therefore, it is crucial to determine how a network device should select a terminal device that is capable of providing a sensing service in the sensing area to perform a sensing procedure. This application provides corresponding technical solutions. The following describes the technical solutions with reference to specific embodiments.

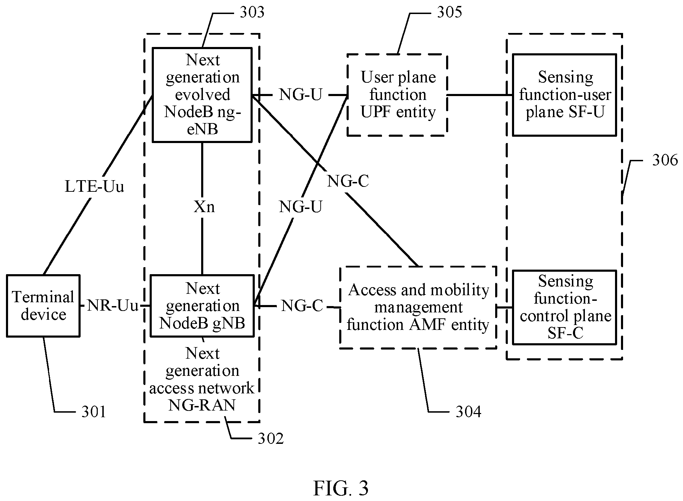

FIG. 3 is a diagram of a communication system according to an embodiment of this application. Refer to FIG. 3. The communication system includes a terminal device 301, a next generation NodeB (next generation NodeB, gNB) 302, a next generation evolved NodeB (next generation evolved NodeB, ng-eNB) 303, an access and mobility management function (access and mobility management function, AMF) entity 304, a user plane function (user plane function, UPF) entity 305, and a sensing function (sensing function, SF) entity 306.

The sensing function entity 306 shown in FIG. 3 is described by using an implementation in which a user plane and a control plane are separated as an example. During actual application, the user plane and the control plane of the sensing function entity may alternatively not be separated. This is not specifically limited in this application.

It should be noted that the access and mobility management function entity 304 and the user plane function entity 305 are optional, and the gNB 302 and the ng-eNB 303 may be connected to the sensing function entity 306.

The terminal device 301 communicates with an access network device (for example, the gNB 302 or the ng-eNB 303 in FIG. 3) through a Uu interface. The ng-eNB 303 is an access network device in a long term evolution (long term evolution, LTE) communication system, and the gNB 302 is an access network device in a new radio (new radio, NR) communication system. In the communication system, access network devices communicate with each other through an Xn interface, and the access network device communicates with the access and mobility management function entity 304 through an NG-C interface. The access network device communicates with the user plane function entity 305 through an NG-U interface. The user plane function entity 305 is connected to the user plane of the sensing function entity 306, and the access and mobility management function entity 304 is connected to the control plane of the sensing function entity 306.

Optionally, the communication system further includes a location management function (location management function, LMF) entity. The location management function entity is a network element, a module, or a component that provides a location function entity for the terminal device in an NR core network. Optionally, the sensing function entity 306 and the location management function entity may be deployed together, or may be separately deployed. This is not specifically limited in this application.

FIG. 1 merely shows an example in which the communication system includes two access network devices: the gNB and the ng-eNB. During actual application, the communication system may include at least one access network device. This is not specifically limited in this application.

The technical solutions of this application may be applied to a cellular communication system related to the 3rd generation partnership project (3rd generation partnership project, 3GPP), for example, a 4th generation (4th generation, 4G) communication system, a 5G communication system, or a communication system after the 5th generation communication system, for example, a 6th generation communication system. For example, the 4th generation communication system may include a long term evolution (long term evolution, LTE) communication system. The 5th generation communication system may include a new radio (new radio, NR) communication system. The technical solutions of this application may also be applied to a wireless fidelity (wireless fidelity, Wi-Fi) system, a communication system that supports integration of a plurality of wireless technologies, a device-to-device (device-to-device, D2D) system, or a vehicle-to-everything (vehicle-to-everything, V2X) communication system.

The following describes the terminal device, the access network device, the sensing function entity, and the core network device in this application.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal (for example, an uncrewed aerial vehicle or a vehicle) in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self-driving may be an uncrewed aerial vehicle, a helicopter, or an airplane. For example, a wireless terminal in vehicle-to-everything may be a vehicle-mounted device, vehicle equipment, a vehicle-mounted module, a vehicle, or a ship. The wireless terminal in industrial control may be a camera, a robot, a robotic arm, or the like. The wireless terminal in the smart home may be a television, an air conditioner, a sweeper, a speaker, a set-top box, or the like.

It should be noted that the terminal device may alternatively be a chip, a module, or a control unit in the foregoing possible devices or apparatuses. This is not specifically limited in this application.

The access network device is an apparatus that is deployed in a radio access network and that provides the wireless communication function for the terminal device. The access network device may be a radio access network (radio access network, RAN) node that enables the terminal device to access the wireless network, and may also be referred to as an access network device, a RAN entity, an access node, a network node, a communication apparatus, or the like.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; or may be a network device in a 5G mobile communication system, for example, a next generation NodeB (next generation NodeB, gNB), a TRP, or a transmission point (transmission point, TP) in an NR system, or one antenna panel or a group of antenna panels (including a plurality of antenna panels) of a base station in the 5G mobile communication system. Alternatively, the access network device may be a network node that forms a gNB or a transmission point, for example, a baseband unit (baseband unit, BBU) or a distributed unit (distributed unit, DU).

In some deployments, the gNB may include a central unit (central unit, CU) and a DU. The gNB may further include an active antenna unit (active antenna unit, AAU). The CU implements a part of functions of the gNB, and the DU implements a part of functions of the gNB.

For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU.

It may be understood that the access network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The sensing function entity may select a proper access network device and terminal device, and send a sensing request to the access network device. A sensing procedure is performed between the access network device and the terminal device, to implement sensing. In a possible implementation, the sensing function entity and the location management function are deployed together. In this implementation, the sensing function entity further has a function of positioning the terminal device. In another possible implementation, the sensing function entity and the location management function entity are separately deployed. In a current communication system or a future communication system, a name of the sensing function entity may change with evolution of the communication system. Any functional network element that has another name and that has a function similar to that of the location management function entity may be understood as the location management function entity in this application. Any functional network element that has another name and that has a function similar to that of the sensing function entity may be understood as the sensing function entity in this application, and is applicable to the sensing method provided in this application. For example, the name of the sensing function entity may also be a communication sensing function entity, a location management function entity, a first network element, or another name. Specifically, the name of the sensing function entity is not limited in this application. The following embodiments mainly describe operations performed by the functional network element in a description manner of the sensing function entity.

The core network device may be responsible for access control, registration management, service management, mobility management, and the like for the terminal device to access a network. For example, the core network device is an access and mobility management function entity, a sensing function entity, or an application function (application function, AF) entity. In this application, names of the access and mobility management function entity and the application function entity may separately change with evolution of the communication system. In the current communication system or the future communication system, any functional network element that has another name and that has a function similar to that of the access and mobility management function entity may be understood as the access and mobility management function entity in this application, and is applicable to the sensing method provided in this application. Any functional network element that has another name and that has a function similar to that of the application function entity may be understood as the application function entity in this application.

The following describes the technical solutions of this application with reference to specific embodiments.

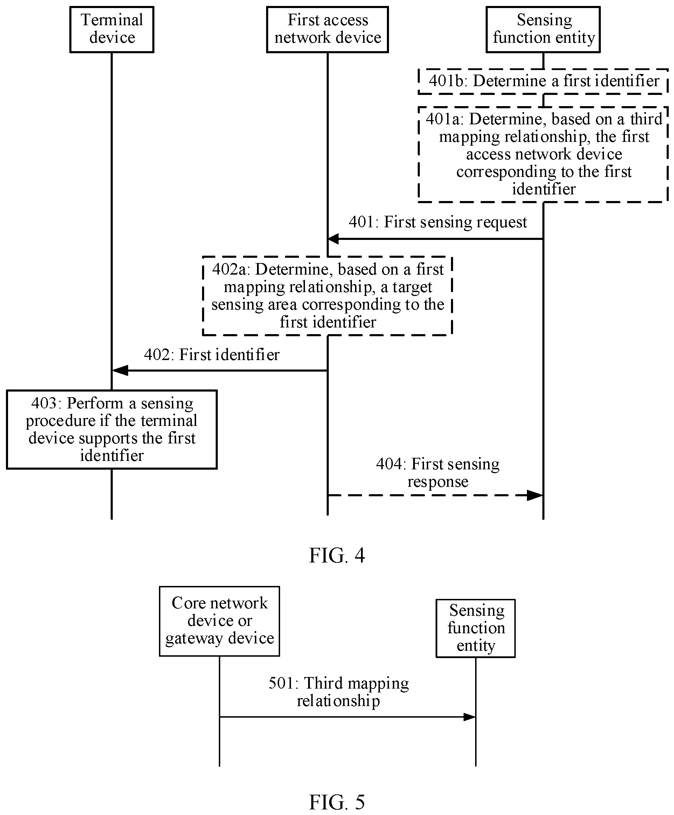

FIG. 4 is a diagram of an embodiment of a sensing method according to an embodiment of this application. Refer to FIG. 4. The method includes the following steps.

It should be noted that, in the embodiment shown in FIG. 4, an example in which a terminal device, a first access network device, and a sensing function entity are used as execution bodies of interaction illustration is used to illustrate the method. However, the execution bodies of the interaction illustration are not limited in this application. For example, in the embodiment shown in FIG. 4, step 402 and step 403 are performed by the terminal device, or may be performed by a chip, a chip system, or a processor that supports the terminal device in implementing the method, or may be a logical module or software that can implement all or part of functions of the terminal device. In the embodiment shown in FIG. 4, step 401, step 401a, step 401b, and step 404 are performed by the sensing function entity, or may be performed by a chip, a chip system, or a processor that supports the sensing function entity in implementing the method, or may be a logical module or software that can implement all or part of the sensing function entity. In the embodiment shown in FIG. 4, step 401, step 402a, step 402, and step 404 are performed by the first access network device, or may be performed by a chip, a chip system, or a processor that supports the first access network device in implementing the method, or may be a logical module or software that can implement all or part of the first access network device.

401: The sensing function entity sends a first sensing request to the first access network device. Correspondingly, the first access network device receives the first sensing request from the sensing function entity.

The first sensing request is used to request to perform a sensing procedure. Optionally, the first sensing request includes a first identifier. The first identifier identifies a target sensing area, and/or identifies a first sensing service. For example, the first sensing service may be a sensing service in an industrial park, a sensing service in an indoor place, vehicle monitoring on a road segment, or the like. For another example, the first identifier may identify a sensing service in a V2X scenario, or the first identifier may identify a vehicle speed monitoring sensing service in the V2X scenario.

It should be noted that a name of the first identifier may be an area identifier (area ID), a service identifier (service ID), a sensing service identifier (sensing service ID), a service group identifier (service group ID), or a sensing capability identifier (sensing capability ID). Specifically, the name of the first identifier is not limited in this application.

Optionally, the first identifier may alternatively identify the first sensing service in the target sensing area. That is, the first identifier identifies a specific sensing service in a specific sensing area, for example, vehicle speed monitoring on a specific road segment, or a vehicle speed monitoring sensing service in a specific service scenario; or for another example, monitoring a quantity of terminals in a cell or in an area smaller than the cell.

It can be learned that, in this application, the first identifier may identify or differentiate a sensing area, and/or identify or differentiate a sensing service.

In step 401, the first access network device is located in the target sensing area. Alternatively, the first access network device is included in the target sensing area of the requested first sensing service.

Optionally, the first sensing request further includes at least one of the following: area information of the target sensing area, service information of the target sensing area, a sensing type corresponding to the first sensing service, sensing time, or a sensing accuracy requirement. For example, the area information of the target sensing area includes at least one of the following: a coordinate range or a cell list of the target sensing area, where the cell list represents a location of the target sensing area. For example, the service information of the target sensing area may include a service type, for example, vehicle speed detection in V2X, or load information in the target sensing area. The sensing service indicated in service information of a target sensing service herein may be understood as the first sensing service. For example, a requirement of the sensing service includes a sensing accuracy requirement and/or a sensing time requirement of the sensing service.

Optionally, the first sensing request further includes a sensing function entity identifier (SF ID).

Specifically, the sensing function entity determines the first access network device corresponding to the first identifier, and sends the first sensing request to the first access network device.

In a possible implementation, if the first identifier identifies the target sensing area and/or identifies the first sensing service, the sensing function entity determines, based on a third mapping relationship, the first access network device corresponding to the first identifier. For the third mapping relationship, refer to related descriptions of step 401a. It should be noted that, in step 401, the first access network device may include one or more access network devices. That is, the first identifier corresponds to one or more access network devices.

In another possible implementation, the first sensing request includes an identifier of the first access network device. The terminal device determines, based on the first sensing request, the first access network device corresponding to the first identifier. It should be noted that, in step 401, the first access network device may include one or more access network devices. That is, the first sensing request includes an identifier of the one or more access network devices.

Optionally, the embodiment shown in FIG. 4 further includes step 401a. Step 401a may be performed before step 401.

401a: The sensing function entity determines, based on the third mapping relationship, the first access network device corresponding to the first identifier.

The third mapping relationship includes a mapping relationship between at least one identifier and an access network device, and the at least one identifier is an identifier supported by an access network device in at least one sensing area. The access network device in the at least one sensing area may be an access network device managed by an access and mobility management function entity. Each of the at least one identifier corresponds to one or more access network devices. The at least one identifier includes the first identifier. For example, the third mapping relationship may be represented as shown in Table 1.

**Table 1**

| Identifier | Access network device |
|---|---|
| Identifier 1 | Access network device 1 |
| Identifier 2 | Access network device 1 and access network device 2 |
| Identifier 3 | Access network device 2 and access network device 3 |
| ... | ... |
| Identifier n | Access network device n |

For example, the first identifier is the identifier 1. It can be learned from Table 1 that the first identifier corresponds to the access network device 1, that is, the first access network device is the access network device 1. For another example, the first identifier is the identifier 2. It can be learned from Table 1 that the first identifier corresponds to the access network device 1 and the access network device 2, that is, the first access network device includes the access network device 1 and the access network device 2.

Optionally, the following describes a possible manner of configuring the third mapping relationship for the sensing function entity with reference to an embodiment shown in FIG. 5. This application is also applicable to another implementation. This is not specifically limited in this application.

501: A core network device or a gateway device sends the third mapping relationship to the sensing function entity. Correspondingly, the sensing function entity receives the third mapping relationship from the core network device or the gateway device.

Optionally, the core network device may be an access and mobility management function entity or an application function entity.

It should be noted that step 501 may be performed before step 401 in the embodiment shown in FIG. 4.

Optionally, if the first identifier identifies the target sensing area, but the first identifier does not identify the first sensing service, the sensing function entity further sends, to the first access network device, the service information of the target sensing area, that is, service information of the first sensing service. Optionally, the service information of the target sensing area is carried in the first sensing request.

Optionally, if the first identifier does not identify the target sensing area, but the first identifier identifies the first sensing service, the sensing function entity further sends, to the first access network device, the area information of the target sensing area, for example, the coordinate range of the target sensing area. Optionally, the area information of the target sensing area is carried in the first sensing request.

Optionally, if the first identifier identifies the first sensing service in the target sensing area, the sensing function entity may send the first identifier to the first access network device, and does not need to send the area information and the service information of the target sensing area.

Optionally, the embodiment shown in FIG. 4 further includes step 401b. Step 401b may be performed before step 401.

401b: The sensing function entity determines the first identifier.

It should be noted that, if the embodiment shown in FIG. 4 includes step 401a, step 401b may be performed before step 401a.

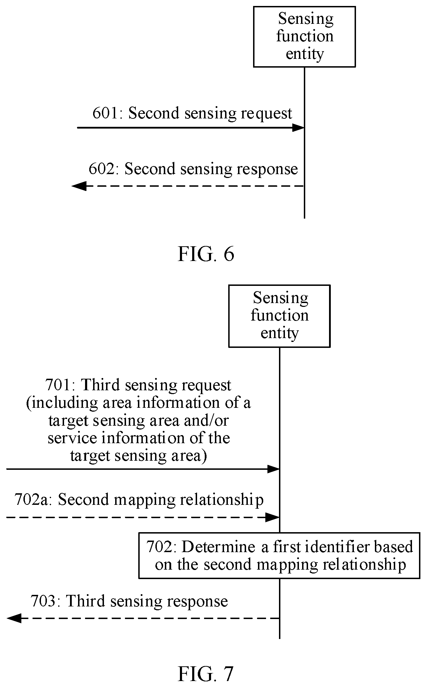

The following describes two possible implementations of step 401b with reference to FIG. 6 and FIG. 7. This application is still applicable to another implementation, and the following implementations do not constitute a limitation on this application.

Implementation mode 1: Optionally, step 401 specifically includes step 601 in an embodiment shown in FIG. 6.

601: The sensing function entity receives a second sensing request.

The second sensing request includes the first identifier. The second sensing request is used to request to perform the sensing procedure. Specifically, the sensing function entity determines the first identifier based on the second sensing request. For the first identifier, refer to related descriptions of step 401 in the embodiment shown in FIG. 4.

Optionally, the sensing function entity receives the second sensing request from the terminal device, the access and mobility management function entity, or the application function entity.

Optionally, the second sensing request further includes at least one of the following: the area information of the target sensing area, the service information of the target sensing area, or the requirement of the sensing service. For the content included in the second sensing request, refer to related descriptions of the content included in the first sensing request. Details are not described herein again.

Implementation mode 2: Optionally, step 401 specifically includes step 701 and step 702 in an embodiment shown in FIG. 7.

701: The sensing function entity receives a third sensing request. The third sensing request includes the area information of the target sensing area and/or the service information of the target sensing area.

The third sensing request is used to request to perform the sensing procedure. For example, the area information of the target sensing area includes at least one of the following: a coordinate range or a cell list of the target sensing area, where the cell list represents a location of the target sensing area. For example, the service information of the target sensing area may include vehicle speed detection in V2X, or load information in the target sensing area. The sensing service indicated in service information of a target sensing service herein may be understood as the first sensing service in step 401.

Optionally, the sensing function entity receives the third sensing request from the terminal device, the access and mobility management function entity, or the application function entity.

Optionally, the third sensing request further includes the requirement of the sensing service. The requirement of the sensing service includes at least one of the following: a sensing time requirement or a sensing accuracy requirement of the sensing service.

702: The sensing function entity determines the first identifier based on a second mapping relationship.

In a possible implementation, the third sensing request includes the area information of the target sensing area, and the second mapping relationship includes a mapping relationship between area information of at least one sensing area and at least one identifier. The at least one identifier is an identifier supported by an access network device in the at least one sensing area. For example, the second mapping relationship may be represented as shown in Table 2.

**Table 2**

| Area information of the sensing area | Identifier |
|---|---|
| Area information 1 | Identifier 1 |
| Area information 2 | Identifier 2 |
| ... | ... |
| Area information n | Identifier n |

For example, the area information of the target sensing area includes the area information 1. Therefore, it can be learned from Table 2 that the area information 1 corresponds to the identifier 1, that is, the first identifier is the identifier 1.

In another possible implementation, the third sensing request includes the service information of the target sensing area, and the second mapping relationship includes a mapping relationship between at least one piece of service information and at least one identifier. The at least one identifier is an identifier supported by an access network device in the at least one sensing area. For example, the second mapping relationship may be represented as shown in Table 3.

**Table 3**

| Service information | Identifier |
|---|---|
| Service information 1 | Identifier 1 |
| Service information 2 | Identifier 2 |
| ... | ... |
| Service information n | Identifier n |

For example, the service information of the target sensing area includes the service information 1. Therefore, it can be learned from Table 3 that the service information 1 corresponds to the identifier 1, that is, the first identifier is the identifier 1.

In still another possible implementation, the third sensing request includes the area information of the target sensing area and the service information of the target sensing area.

The second mapping relationship includes a mapping relationship between at least one identifier and a combination of area information of at least one sensing area and at least one piece of service information. The at least one identifier is an identifier supported by an access network device in the at least one sensing area. Each of the at least one identifier identifies a specific sensing area and a specific sensing service, or each identifier indicates a specific sensing service in a specific sensing area. For example, the second mapping relationship may be represented as shown in Table 4.

**Table 4**

| Area information and service information of the sensing area | Identifier |
|---|---|
| Area information 1 and service information 1 | Identifier 1 |
| Area information 2 and service information 2 | Identifier 2 |
| ... | ... |
| Area information n and service information n | Identifier n |

For example, the area information of the target sensing area includes the area information 1, and the service information of the target sensing area includes the service information 1. Therefore, it can be learned from Table 4 that both the area information 1 and the service information 1 correspond to the identifier 1, that is, the first identifier is the identifier 1.

Optionally, the embodiment shown in FIG. 7 further includes step 702a. Step 702a may be performed before step 702.

702a: The sensing function entity receives the second mapping relationship.

Optionally, the sensing function entity receives the second mapping relationship from the access and mobility management function or the gateway device.

Specifically, the access and mobility management function entity or the gateway device determines the second mapping relationship, and sends the second mapping relationship to the sensing function entity.

402: The first access network device sends the first identifier to the terminal device. Correspondingly, the terminal device receives the first identifier from the first access network device.

The terminal device is located in the target sensing area.

Optionally, the first access network device sends the first identifier to the terminal device by using a paging message, a system message, or an RRC message. Correspondingly, the terminal device receives the first identifier from the first access network device by using the paging message, the system message, or the RRC message.

For example, if the terminal device is in an RRC connected mode, the first access network device may send the first identifier to the terminal device by using the RRC message.

For example, the first access network device may send the first identifier to the terminal device by using the paging message.

For example, the first access network device broadcasts the first identifier by using the system message.

Optionally, if the first identifier identifies the target sensing area, but the first identifier does not identify the first sensing service, the first access network device further sends, to the terminal device, the service information of the target sensing area, that is, service information of the first sensing service.

Optionally, if the first identifier does not identify the target sensing area, but the first identifier identifies the first sensing service, the first access network device further sends, to the terminal device, the area information of the target sensing area, for example, the coordinate range of the target sensing area.

Optionally, if the first identifier identifies the first sensing service in the target sensing area, the first access network device may send the first identifier to the terminal device, and does not need to send the area information and the service information of the target sensing area.

When the first identifier identifies the target sensing area, the first access network device determines the target sensing area corresponding to the first identifier. The first access network device sends the first identifier to a terminal device located in the target sensing area. Specifically, the first access network device may select a corresponding cell and/or a corresponding beam. Then, the first access network device sends, in the cell by using the beam, the first identifier to the terminal device located in the target sensing area.

Optionally, the embodiment shown in FIG. 4 further includes step 402a. Step 402a may be performed before step 402.

402a: The first access network device determines, based on a first mapping relationship, the target sensing area corresponding to the first identifier.

It should be noted that the first access network device includes one or more access network devices. The following uses an example in which the first access network device includes one access network device for description. For a case in which there are a plurality of access network devices, each access network device determines, based on a first mapping relationship preconfigured in the access network device, the target sensing area corresponding to the first identifier.

The first mapping relationship includes a mapping relationship between at least one identifier supported by the first access network device and sensing area information. Each of the at least one identifier identifies a specific sensing area. The first identifier belongs to the at least one identifier. Each identifier supported by the first access network device means that the first access network device supports implementation, with the assistance of a terminal device, of a sensing procedure in a specific sensing area identified by the identifier. For example, the first mapping relationship may be represented as shown in Table 5.

**Table 5**

| Identifier | Sensing area information |
|---|---|
| Identifier 1 | Sensing area information 1 |
| Identifier 2 | Sensing area information 2 |
| Identifier 3 | Sensing area information 3 |
| ... | ... |
| Identifier n | Sensing area information n |

For example, as shown in Table 5, the first identifier is the identifier 1. It can be learned from Table 5 that the identifier 1 corresponds to the sensing area information 1. The sensing area information 1 includes the area information of the target sensing area.

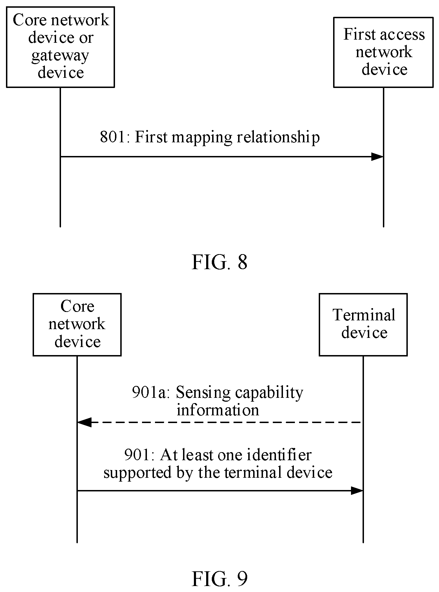

Optionally, the following describes a possible manner of configuring the first mapping relationship for the first access network device with reference to an embodiment shown in FIG. 8. This application is also applicable to another implementation. This is not specifically limited in this application.

801: The core network device or the gateway device sends the first mapping relationship to the first access network device. Correspondingly, the first access network device receives the first mapping relationship from the core network device or the gateway device.

Optionally, the core network device is a sensing function entity or an access and mobility management function entity.

It should be noted that step 801 may be performed before step 402a. There is no fixed execution sequence between step 801 and step 401. Step 801 may be performed before step 401; step 401 may be performed before step 801; or step 801 and step 401 may be simultaneously performed based on a case. This is not specifically limited in this application. If the embodiment shown in FIG. 4 further includes steps 401a and 401b, there is no fixed execution sequence between step 801 and steps 401a and 401b. Step 801 may be performed before steps 401a and 401b; steps 401a and 401b may be performed before step 801; or steps 401a and 401b and step 801 may be simultaneously performed based on a case. This is not specifically limited in this application.

403: If the terminal device supports the first identifier, the terminal device performs the sensing procedure.

The terminal device determines at least one identifier supported by the terminal device. Optionally, each of the at least one identifier supported by the terminal device identifies a specific sensing area, and/or each identifier identifies a specific sensing service.

Each identifier identifies a specific sensing area. Each identifier supported by the terminal device may be understood as that the terminal device supports performing a sensing procedure in the sensing area identified by the identifier. Alternatively, each identifier identifies a specific sensing service. Each identifier supported by the terminal device may be understood as that the terminal device supports performing a sensing procedure corresponding to the sensing service identified by the identifier. Alternatively, each identifier identifies a specific sensing service in a specific sensing area. Each identifier supported by the terminal device may be understood as that the terminal device supports performing a sensing procedure corresponding to the sensing service identified by the identifier in the sensing area identified by the identifier.

Therefore, that the terminal device supports the first identifier may specifically mean that the terminal device supports performing a sensing procedure in the target sensing area identified by the first identifier, or that the terminal device supports performing a sensing procedure corresponding to the first sensing service identified by the first identifier, or that the terminal device supports performing a sensing procedure corresponding to the first sensing service in the target sensing area identified by the first identifier.

Specifically, if the first identifier belongs to the at least one identifier supported by the terminal device, the terminal device performs the sensing procedure. If the first identifier does not belong to the at least one identifier supported by the terminal device, the terminal device ignores the first identifier. For example, the terminal device receives a paging message from the first access network device. The paging message includes the first identifier. If the terminal device supports the first identifier, the terminal device may initiate random access to access a network, and then perform a sensing procedure. If the terminal device does not support the first identifier, the terminal device may not initiate random access, but ignore the paging message. It can be learned that, in the technical solution of this application, when sensing the target sensing area, the first access network device may trigger, based on the first identifier, a proper terminal device to participate in sensing, so as to perform the sensing procedure.

Optionally, the first identifier identifies the target sensing area, but does not identify the first sensing service. If the terminal device supports the first identifier, the terminal device performs the sensing procedure, and the terminal device is located in the target sensing area.

Optionally, the first identifier identifies the first sensing service, but does not need to identify the target sensing area. If the terminal device supports the first identifier, the terminal device performs the sensing procedure corresponding to the first sensing service, and the terminal device may be located in the target sensing area, or may not be located in the target sensing area. Optionally, if the first sensing request received by the first access network device includes the area information of the target sensing area, the first access network device sends the first identifier to the target sensing area. If the terminal device supports the first identifier and is located in the target sensing area, the terminal device performs the sensing procedure.

In a possible implementation, that the terminal device performs the sensing procedure includes: The terminal device receives a sensing signal, where the sensing signal is obtained by reflecting, by an object in the target sensing area, a signal transmitted by the first access network device. The terminal device measures the sensing signal to obtain a sensing result. The terminal device sends a sensing report to the first access network device, the access and mobility management function entity, the sensing function entity, or a location management function entity, where the sensing report includes the sensing result and the first identifier. Optionally, the sensing report further includes the area information of the target sensing area, and/or the service information of the target sensing area (that is, the service information of the first sensing service). For example, if the first identifier identifies the target sensing area, but does not identify the first sensing service, the sensing report may further include the service information of the first sensing service. For another example, if the first identifier identifies the first sensing service, but does not identify the target sensing area, the sensing packet may further include the area information of the target sensing area.

In another possible implementation, that the terminal device performs the sensing procedure includes: The terminal device transmits a signal in the target sensing area, where the signal is reflected by an object in the target sensing area to obtain a sensing signal. The first access network device measures the sensing signal to obtain a sensing result. The first access network device may send a sensing report to the access and mobility management function entity, the sensing function entity, or a location management function entity, where the sensing report includes the sensing result and the first identifier. Optionally, the sensing report further includes the area information of the target sensing area, and/or the service information of the target sensing area (that is, the service information of the first sensing service). For example, if the first identifier identifies the target sensing area, but does not identify the first sensing service, the sensing packet may further include the service information of the first sensing service. For another example, if the first identifier identifies the first sensing service, but does not identify the target sensing area, the sensing packet may further include the area information of the target sensing area.

Optionally, the following describes a possible implementation of configuring, for the terminal device, the at least one identifier supported by the terminal device with reference to an embodiment shown in FIG. 9. This application is also applicable to another implementation. This is not specifically limited in this application.

901: The core network device sends the at least one identifier supported by the terminal device to the terminal device. Correspondingly, the terminal device receives the at least one identifier from the core network device.

In a possible implementation, the core network device is a unified data management function entity. The terminal device receives, from the unified data management function entity via the access and mobility management function entity, the at least one identifier supported by the terminal device.

Specifically, the at least one identifier supported by the terminal device may be stored in the unified data management function entity during subscription of the terminal device. When the terminal device initiates registration, the access and mobility management function entity may read, from the unified data management function entity, the at least one identifier supported by the terminal device, and send the at least one identifier supported by the terminal device to the terminal device.

In another possible implementation, the core network device is a sensing function entity. The terminal device receives, from the sensing function entity, the at least one identifier supported by the terminal device.

Specifically, the sensing function entity may determine, based on a service requirement and sensing capability information of the terminal device, the at least one identifier supported by the terminal device. Then, the sensing function entity sends the at least one identifier supported by the terminal device to the terminal device.

It should be noted that step 901 may be performed before step 403 in the embodiment shown in FIG. 4. It should be noted that there is no fixed execution sequence between step 901 and steps 401 to 402 in the embodiment shown in FIG. 4. For example, step 901 is performed before steps 401 to 402; steps 401 to 402 are performed before step 901; or step 901 and steps 401 to 402 are simultaneously performed based on a case. This is not specifically limited in this application.

Optionally, the embodiment shown in FIG. 9 further includes step 901a. Step 901a may be performed before step 901.

901a: The terminal device sends the sensing capability information to the core network device. Correspondingly, the core network device receives the sensing capability information from the terminal device.

For example, the sensing capability information includes at least one of the following: a sensing mode supported by the terminal device, a capability of measuring a sensing signal, or a computing capability.

Optionally, the embodiment shown in FIG. 4 further includes step 404. Step 404 may be performed after step 403.

404: The first access network device sends a first sensing response to the sensing function entity. Correspondingly, the sensing function entity receives the first sensing response from the first access network device.

The first sensing response includes the first identifier. The first sensing response indicates whether the sensing procedure is successfully performed.

In a possible implementation, it can be learned from the foregoing descriptions of step 403 that the first access network device receives the sensing report from the terminal device, where the sensing report includes the sensing result and the first identifier. The first access network device may send the first sensing response to the sensing function entity, where the first sensing response indicates that the sensing procedure is successfully performed. Optionally, the first sensing response includes the first identifier. Optionally, the first sensing response further includes the sensing result. Optionally, the first sensing response further includes the area information of the target sensing area, and/or the service information of the target sensing area (that is, the service information of the first sensing service). For example, if the first identifier identifies the target sensing area, but does not identify the first sensing service, the first sensing response may further include the service information of the first sensing service. For another example, if the first identifier identifies the first sensing service, but does not identify the target sensing area, the first sensing response may further include the area information of the target sensing area.

In another possible implementation, it can be learned from the foregoing descriptions of step 403 that the first access network device measures the sensing signal to obtain the sensing result. The first access network device sends the first sensing response to the sensing function entity, where the first sensing response indicates that the sensing procedure is successfully performed. Optionally, the first sensing response includes the first identifier. Optionally, the first sensing response further includes the sensing result. Optionally, the first sensing response further includes the area information of the target sensing area, and/or the service information of the target sensing area (that is, the service information of the first sensing service). For example, if the first identifier identifies the target sensing area, but does not identify the first sensing service, the first sensing response may further include the service information of the first sensing service. For another example, if the first identifier identifies the first sensing service, but does not identify the target sensing area, the first sensing response may further include the area information of the target sensing area.

Optionally, after step 404, as shown in FIG. 6, in step 602, the first access network device sends a second sensing response. The second sensing response indicates whether the sensing procedure is successfully performed. Optionally, the first access network device sends the second sensing response to the terminal device, the access and mobility management function entity, or the application function entity. For example, the first sensing response indicates that the sensing procedure is successfully performed, and the second sensing response indicates that the sensing procedure is successfully performed. Optionally, the second sensing response includes the first identifier. Optionally, the second sensing response further includes the area information of the target sensing area, and/or the service information of the target sensing area (that is, the service information of the first sensing service). For example, if the first identifier identifies the target sensing area, but does not identify the first sensing service, the second sensing response may further include the service information of the first sensing service. For another example, if the first identifier identifies the first sensing service, but does not identify the target sensing area, the second sensing response may further include the area information of the target sensing area.

Optionally, after step 404, as shown in FIG. 7, in step 703, the first access network device sends a third sensing response. The third sensing response indicates whether the sensing procedure is successfully performed. Optionally, the first access network device sends the third sensing response to the terminal device, the access and mobility management function entity, or the application function entity. For example, the first sensing response indicates that the sensing procedure is successfully performed, and the third sensing response indicates that the sensing procedure is successfully performed. Optionally, the third sensing response includes the first identifier. Optionally, the third sensing response further includes the area information of the target sensing area, and/or the service information of the target sensing area (that is, the service information of the first sensing service). For example, if the first identifier identifies the target sensing area, but does not identify the first sensing service, the third sensing response may further include the service information of the first sensing service. For another example, if the first identifier identifies the first sensing service, but does not identify the target sensing area, the third sensing response may further include the area information of the target sensing area.

In this embodiment of this application, the terminal device receives the first identifier from the first access network device, where the first identifier identifies the target sensing area. If the terminal device supports the first identifier, the terminal device performs the sensing procedure, where the terminal device is located in the target sensing area. It can be learned that the terminal device determines whether the first identifier is supported. If the terminal device supports the first identifier, the terminal device performs the sensing procedure, where the terminal device is located in the target sensing area. In this way, the first access network device selects the terminal device to provide the sensing function entity for performing a sensing procedure.

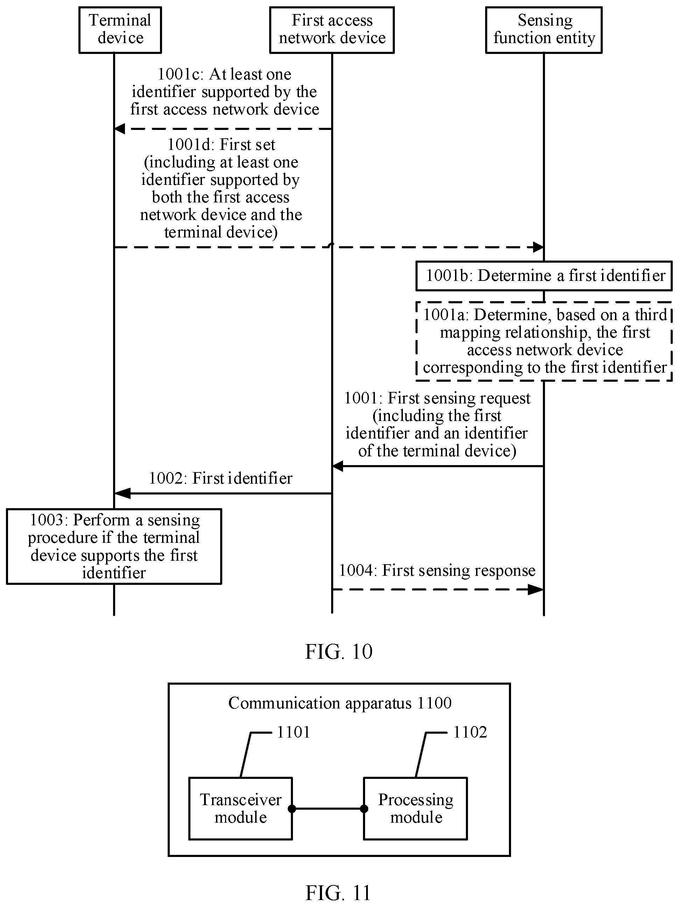

FIG. 10 is a diagram of another embodiment of a sensing method according to an embodiment of this application. Refer to FIG. 10. The method includes the following steps.

It should be noted that, in the embodiment shown in FIG. 10, an example in which a terminal device, a first access network device, and a sensing function entity are used as execution bodies of interaction illustration is used to illustrate the method. However, the execution bodies of the interaction illustration are not limited in this application. For example, in the embodiment shown in FIG. 10, steps 1001c and 1001d, step 1002, and step 1003 are performed by the terminal device, or may be performed by a chip, a chip system, or a processor that supports the terminal device in implementing the method, or may be a logical module or software that can implement all or part of functions of the terminal device. In the embodiment shown in FIG. 10, step 1001a, step 1001b, step 1001d, step 1001, and step 1004 are performed by the sensing function entity, or may be performed by a chip, a chip system, or a processor that supports the sensing function entity in implementing the method, or may be a logical module or software that can implement all or part of the sensing function entity. In the embodiment shown in FIG. 10, step 1001c, step 1001, step 1002, and step 1004 are performed by the first access network device, or may be performed by a chip, a chip system, or a processor that supports the first access network device in implementing the method, or may be a logical module or software that can implement all or part of the first access network device.

1001: The sensing function entity sends a first sensing request to the first access network device. The first sensing request includes a first identifier and an identifier of the terminal device. Correspondingly, the first access network device receives the first sensing request from the sensing function entity.

Specifically, the sensing function entity determines the first access network device corresponding to the first identifier. The sensing function entity determines that the terminal device supports the first identifier. Therefore, the first sensing request may include the first identifier and the identifier of the terminal device. In this way, the sensing function entity indicates, to the first access network device, that the terminal device may assist the first access network device in implementing a sensing procedure. The sensing function entity selects a proper terminal device to provide a sensing service. Optionally, the sensing function entity may be determined based on a first set in the following step 1001d. For details, refer to the following related descriptions.

Step 1001 is similar to step 401 in the embodiment shown in FIG. 4. For details, refer to step 401 in the embodiment shown in FIG. 4.

Optionally, the embodiment shown in FIG. 10 further includes step 1001a. Step 1001a may be performed before step 1001.

1001a: The sensing function entity determines, based on a third mapping relationship, the first access network device corresponding to the first identifier.

Step 1001a is similar to step 401a in the embodiment shown in FIG. 4. For details, refer to related descriptions of step 401a in the embodiment shown in FIG. 4. Details are not described herein again.

Optionally, the embodiment shown in FIG. 10 further includes step 1001b. Step 1001b may be performed before step 1001.

1001b: The sensing function entity determines the first identifier.

Step 1001b is similar to step 401b in the embodiment shown in FIG. 4. For details, refer to related descriptions of step 401b in the embodiment shown in FIG. 4.

It should be noted that if the embodiment shown in FIG. 4 further includes step 1001a, step 1001b may be performed before step 1001a.

Optionally, the embodiment shown in FIG. 10 further includes step 1001c and step 1001d. Step 1001c and step 1001d may be performed before step 1001.

1001c: The first access network device sends, to the terminal device, at least one identifier supported by the first access network device. Correspondingly, the terminal device receives the at least one identifier from the first access network device.

The identifier supported by the first access network device indicates that the first access network device needs to perform a sensing service in a sensing area corresponding to the identifier, or perform a sensing service corresponding to the identifier in coverage of the first access network device, or perform a corresponding sensing service in the sensing area corresponding to the identifier.

Optionally, the first access network device sends, by using a broadcast message, the at least one identifier supported by the first access network device.

1001d: The terminal device sends the first set to the sensing function entity. The first set includes at least one identifier supported by both the first access network device and the terminal device. Correspondingly, the sensing function entity receives the first set from the terminal device.

In other words, the first set includes at least one identifier that is supported by the terminal device and that is in the at least one identifier sent by the first access network device. Therefore, if the first identifier belongs to the first set, the sensing function entity may determine that the terminal device supports the first identifier. Therefore, the first sensing request in step 401 may include the identifier of the terminal device, so that the sensing function entity indicates the first access network device to select the terminal device, and implement the sensing procedure with assistance of the terminal device.

It should be noted that, in step 1001d, the terminal device reports, in a form of the first set, the at least one identifier supported by both the first access network device and the terminal device. During actual application, the first set may alternatively be represented by using a first list or in another form. This is not specifically limited in this application.

Step 1001c and step 1001d show a possible implementation. During actual application, the terminal device may report, to the sensing function entity, the at least one identifier supported by the terminal device, and then the sensing function entity determines the first set. Alternatively, the terminal device sends and reports, to the first access network device or an access and mobility management function entity, the at least one identifier supported by the terminal device; and the first access network device or the access and mobility management function entity sends, to the sensing function entity, the at least one identifier supported by the terminal device, and then the sensing function entity determines the first set.

1002: The first access network device sends the first identifier to the terminal device. Correspondingly, the terminal device receives the first identifier from the first access network device.

Optionally, the first access network device sends the first identifier to the terminal device by using an RRC message. Correspondingly, the terminal device receives the first identifier from the first access network device by using the RRC message.

Step 1002 is similar to step 402 in the embodiment shown in FIG. 4. For details, refer to related descriptions of step 402 in the embodiment shown in FIG. 4.

1003: If the terminal device supports the first identifier, the terminal device performs the sensing procedure.

Step 1003 is similar to step 403 in the embodiment shown in FIG. 4. For details, refer to related descriptions of step 403 in the embodiment shown in FIG. 4. It can be learned that, in the technical solution of this application, when sensing a target sensing area, the first access network device may trigger, based on the first identifier, a proper terminal device to participate in sensing, so as to perform the sensing procedure.

Optionally, the embodiment shown in FIG. 10 further includes step 1004. Step 1004 may be performed after step 1003.

1004: The first access network device sends a first sensing response to the sensing function entity. Correspondingly, the sensing function entity receives the first sensing response from the first access network device.

Step 1004 is similar to step 404 in the embodiment shown in FIG. 4. For details, refer to related descriptions of step 404 in the embodiment shown in FIG. 4.

In this embodiment of this application, the terminal device receives the first identifier from the first access network device, where the first identifier is used for the target sensing area. If the terminal device supports the first identifier, the terminal device performs the sensing procedure, where the terminal device is located in the target sensing area. It can be learned that the terminal device determines whether the first identifier is supported. If the terminal device supports the first identifier, the terminal device performs the sensing procedure, where the terminal device is located in the target sensing area. In this way, the first access network device selects the terminal device to provide a sensing service for performing a sensing procedure.

The following describes a communication apparatus provided in this application.

FIG. 11 is a diagram of a structure of a communication apparatus according to an embodiment of this application. Refer to FIG. 11. The communication apparatus 1100 includes a transceiver module 1101 and a processing module 1102.

The communication apparatus 1100 includes a terminal device, or a component (for example, a chip), a module, or a unit in the terminal device.

The communication apparatus 1100 may be configured to perform all or part of steps performed by the terminal device in the embodiments shown in FIG. 4, FIG. 9, and FIG. 10. For details, refer to related descriptions in the embodiments shown in FIG. 4, FIG. 9, and FIG. 10.

The processing module 1102 is configured to process data. The transceiver module 1101 is configured to implement a corresponding communication function.

Optionally, the transceiver module 1101 may include a sending module and a receiving module. The sending module is configured to perform a sending operation in the foregoing method embodiments. The receiving module is configured to perform a receiving operation in the foregoing method embodiments.

It should be noted that the communication apparatus 1100 may include the sending module but not include the receiving module. Alternatively, the communication apparatus 1100 may include the receiving module but not include the sending module. This may be specifically determined depending on whether the foregoing solution performed by the communication apparatus 1100 includes a sending action and a receiving action.

Optionally, the communication apparatus 1100 may further include a storage module. The storage module may be configured to store instructions and/or data. The processing module 1102 may read the instructions and/or the data in the storage module, to enable the communication apparatus 1100 to implement the foregoing method embodiments.

The communication apparatus 1100 may be configured to perform an action performed by the terminal device in the foregoing method embodiments. The processing module 1102 is configured to perform a processing-related operation on a terminal device side in the foregoing method embodiments. The transceiver module 1101 is configured to perform a receiving-related operation on the terminal device side in the foregoing method embodiments.

For example, the communication apparatus 1100 is configured to perform the following solution.

The transceiver module 1101 is configured to receive a first identifier from a first access network device, where the first identifier identifies a target sensing area, and/or the first identifier identifies a first sensing service.

The processing module 1102 is configured to perform a sensing procedure if the communication apparatus 1100 supports the first identifier.

In a possible implementation, the communication apparatus 1100 is located in the target sensing area.

In another possible implementation, the first identifier further identifies a first sensing service; and the processing module 1102 is specifically configured to perform a sensing procedure corresponding to the first sensing service.

In another possible implementation, the transceiver module 1101 is further configured to receive, from a core network device, at least one identifier supported by the communication apparatus 1100, where each of the at least one identifier supported by the communication apparatus 1100 identifies a specific sensing area, and/or each of the at least one identifier supported by the communication apparatus 1100 identifies a specific sensing service.

In another possible implementation, each of the at least one identifier identifies a specific sensing area, and each of the at least one identifier further identifies a specific sensing service.

In another possible implementation, the transceiver module 1101 is specifically configured to: receive, from a unified data management function entity via an access and mobility management function entity, the at least one identifier supported by the communication apparatus 1100; or receive, from a sensing function entity, the at least one identifier supported by the communication apparatus 1100.

In another possible implementation, the transceiver module 1101 is further configured to: receive, from the first access network device, at least one identifier supported by the first access network device; and send a first set to the sensing function entity, where the first set includes at least one identifier supported by both the first access network device and the communication apparatus 1100.

In another possible implementation, the transceiver module 1101 is further configured to send sensing capability information of the communication apparatus 1100 to the sensing function entity.

In another possible implementation, the first identifier is carried in a paging message, a system message, or an RRC message.

In another possible implementation, if the first identifier identifies the target sensing area, but does not identify the first sensing service, the transceiver module 1101 is further configured to receive service information of the target sensing area from the first access network device, where the service information of the target sensing area includes the first sensing service.

In another possible implementation, if the first identifier identifies the first sensing service, but does not identify the target sensing area, the transceiver module 1101 is further configured to receive area information of the target sensing area from the first access network device.

It should be understood that a specific process in which the modules perform the foregoing corresponding process has been described in detail in the foregoing method embodiments. For brevity, details are not described herein again.

The processing module 1102 in the foregoing embodiment may be implemented by at least one processor or processor-related circuit. The transceiver module 1101 may be implemented by a transceiver or a transceiver-related circuit. The transceiver module 1101 may also be referred to as a communication module or a communication interface. The storage module may be implemented by at least one memory.

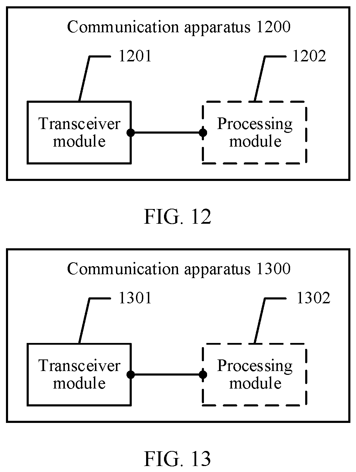

FIG. 12 is a diagram of another structure of a communication apparatus according to an embodiment of this application. Refer to FIG. 12. The communication apparatus 1200 includes a transceiver module 1201. Optionally, the communication apparatus 1200 further includes a processing module 1202.

The communication apparatus 1200 includes a first access network device, or a component (for example, a chip), a module, or a unit in the first access network device.

The communication apparatus 1200 may be configured to perform all or part of steps performed by the first access network device in the embodiments shown in FIG. 4, FIG. 8, and FIG. 10. For details, refer to related descriptions in the embodiments shown in FIG. 4, FIG. 8, and FIG. 10.

The processing module 1202 is configured to process data. The transceiver module 1201 is configured to implement a corresponding communication function.

Optionally, the transceiver module 1201 may include a sending module and a receiving module. The sending module is configured to perform a sending operation in the foregoing method embodiments. The receiving module is configured to perform a receiving operation in the foregoing method embodiments.

It should be noted that the communication apparatus 1200 may include the sending module but not include the receiving module. Alternatively, the communication apparatus 1200 may include the receiving module but not include the sending module. This may be specifically determined depending on whether the foregoing solution performed by the communication apparatus 1200 includes a sending action and a receiving action.

Optionally, the communication apparatus 1200 may further include a storage module. The storage module may be configured to store instructions and/or data. The processing module 1202 may read the instructions and/or the data in the storage module, to enable the communication apparatus 1200 to implement the foregoing method embodiments.

The communication apparatus 1200 may be configured to perform an action performed by the first access network device in the foregoing method embodiments. The processing module 1202 is configured to perform a processing-related operation on a first access network device side in the foregoing method embodiments. The transceiver module 1201 is configured to perform a receiving-related operation on the first access network device side in the foregoing method embodiments.

For example, the communication apparatus 1200 is configured to perform the following solution.

The transceiver module 1201 is configured to: receive a first sensing request from a sensing function entity, where the first sensing request includes a first identifier, the first identifier identifies a target sensing area, and/or the first identifier identifies a first sensing service, and the first sensing request is used to request to perform a sensing procedure; and send the first identifier to a terminal device.

In a possible implementation, the terminal device is located in the target sensing area.

In another possible implementation, the processing module 1202 is configured to determine, based on a first mapping relationship, the target sensing area corresponding to the first identifier, where the first mapping relationship includes a mapping relationship between at least one identifier supported by the communication apparatus 1200 and sensing area information, each of the at least one identifier identifies a specific sensing area, and the first identifier belongs to the at least one identifier.

In another possible implementation, each of the at least one identifier further identifies a specific sensing service.

In another possible implementation, the transceiver module 1201 is further configured to receive the first mapping relationship from a core network device or a gateway device.

In another possible implementation, the core network device is a sensing function entity or an access and mobility management function entity.

In another possible implementation, the first sensing request further includes an identifier of the terminal device.

In another possible implementation, the first identifier identifies the target sensing area, and the first identifier further identifies the first sensing service.

In another possible implementation, the first sensing request further includes at least one of the following: area information of the target sensing area, service information of the target sensing area, a sensing type corresponding to the first sensing service, sensing time, or a sensing accuracy requirement.

In another possible implementation, the transceiver module 1201 is specifically configured to send a system message, a paging message, or an RRC message to the terminal device, where the system message, the paging message, or the RRC message includes the first identifier.

In another possible implementation, if the first identifier identifies the target sensing area, but does not identify the first sensing service, the transceiver module 1201 is further configured to send the service information of the target sensing area to the terminal device, where the service information of the target sensing area includes the first sensing service.

In another possible implementation, if the first identifier identifies the first sensing service, but does not identify the target sensing area, the transceiver module 1201 is further configured to send the area information of the target sensing area to the terminal device.

It should be understood that a specific process in which the modules perform the foregoing corresponding process has been described in detail in the foregoing method embodiments. For brevity, details are not described herein again.

The processing module 1202 in the foregoing embodiment may be implemented by at least one processor or processor-related circuit. The transceiver module 1201 may be implemented by a transceiver or a transceiver-related circuit. The transceiver module 1201 may also be referred to as a communication module or a communication interface. The storage module may be implemented by at least one memory.

FIG. 13 is a diagram of still another structure of a communication apparatus according to an embodiment of this application. Refer to FIG. 13. The communication apparatus 1300 includes a transceiver module 1301. Optionally, the communication apparatus 1300 further includes a processing module 1302.

The communication apparatus 1300 includes a sensing function entity, or a component (for example, a chip), a module, or a unit in the sensing function entity.

The communication apparatus 1300 may be configured to perform all or part of steps performed by the sensing function entity in the embodiments shown in FIG. 4, FIG. 5, FIG. 6, FIG. 7, and FIG. 10. For details, refer to related descriptions in the embodiments shown in FIG. 4, FIG. 5, FIG. 6, FIG. 7, and FIG. 10.

The processing module 1302 is configured to process data. The transceiver module 1301 is configured to implement a corresponding communication function.

Optionally, the transceiver module 1301 may include a sending module and a receiving module. The sending module is configured to perform a sending operation in the foregoing method embodiments. The receiving module is configured to perform a receiving operation in the foregoing method embodiments.

It should be noted that the communication apparatus 1300 may include the sending module but not include the receiving module. Alternatively, the communication apparatus 1300 may include the receiving module but not include the sending module. This may be specifically determined depending on whether the foregoing solution performed by the communication apparatus 1300 includes a sending action and a receiving action.

Optionally, the communication apparatus 1300 may further include a storage module. The storage module may be configured to store instructions and/or data. The processing module 1302 may read the instructions and/or the data in the storage module, to enable the communication apparatus 1300 to implement the foregoing method embodiments.

The communication apparatus 1300 may be configured to perform an action performed by the sensing function entity in the foregoing embodiments. The processing module 1302 is configured to perform a processing-related operation on a sensing function entity side in the foregoing method embodiments. The transceiver module 1301 is configured to perform a receiving-related operation on the sensing function entity side in the foregoing method embodiments.

For example, the communication apparatus 1300 is configured to perform the following solution.

The transceiver module 1301 is configured to send a first sensing request to a first access network device, where the first sensing request includes a first identifier, the first identifier identifies a target sensing area, and/or the first identifier identifies a first sensing service, and the first sensing request is used to request to perform a sensing procedure.

In a possible implementation, the processing module 1302 is configured to determine the first identifier.

In another possible implementation, the first identifier corresponds to the first access network device.

In another possible implementation, the first sensing request includes an identifier of the first access network device.

In another possible implementation, the first identifier identifies the target sensing area, and the first identifier further identifies the first sensing service.

In another possible implementation, the first sensing request further includes at least one of the following: area information of the target sensing area, service information of the target sensing area, a sensing type corresponding to the first sensing service, sensing time, or a sensing accuracy requirement.

In another possible implementation, the processing module 1302 is specifically configured to receive a second sensing request, where the second sensing request includes the first identifier, and the second sensing request is used to request to perform the sensing procedure.

In another possible implementation, the processing module 1302 is specifically configured to: receive a third sensing request, where the third sensing request includes the area information of the target sensing area and/or the service information of the target sensing area, and the third sensing request is used to request to perform the sensing procedure; and determine, based on a second mapping relationship, the first identifier corresponding to the area information of the target sensing area, where the second mapping relationship includes a mapping relationship between area information of at least one sensing area and at least one identifier, and the at least one identifier is an identifier supported by an access network device in the at least one sensing area; or determine, based on a second mapping relationship, the first identifier corresponding to the service information of the target sensing area, where the second mapping relationship includes a mapping relationship between at least one piece of service information and at least one identifier, and the at least one identifier is an identifier supported by an access network device in at least one sensing area; or
determine, based on a second mapping relationship, the first identifier corresponding to both the area information of the target sensing area and the service information of the target sensing area, where the second mapping relationship includes a mapping relationship between at least one identifier and a combination of area information of at least one sensing area and at least one piece of service information, and the at least one identifier is an identifier supported by an access network device in the at least one sensing area.

In another possible implementation, the transceiver module 1301 is further configured to receive the second mapping relationship from an access and mobility management function entity.

In another possible implementation, the processing module 1302 is further configured to determine, based on a third mapping relationship, the first access network device corresponding to the first identifier, where the third mapping relationship includes a mapping relationship between at least one identifier and an access network device, and the at least one identifier is an identifier supported by an access network device in the at least one sensing area.

In another possible implementation, the transceiver module 1301 is further configured to receive the third mapping relationship from a core network device or a gateway device.

In another possible implementation, the first sensing request further includes an identifier of a terminal device, and the terminal device is configured to perform the sensing procedure.

In another possible implementation, the transceiver module 1301 is further configured to receive a first set from the terminal device, where the first set includes at least one identifier supported by both the first access network device and the terminal device.

In another possible implementation, the transceiver module 1301 is further configured to receive sensing capability information from the terminal device.

In another possible implementation, if the first identifier identifies the target sensing area, but does not identify the first sensing service, the transceiver module 1301 is further configured to send the service information of the target sensing area to the first access network device.

In another possible implementation, if the first identifier identifies the first sensing service, but does not identify the target sensing area, the transceiver module 1301 is further configured to send the area information of the target sensing area to the first access network device.

It should be understood that a specific process in which the modules perform the foregoing corresponding process has been described in detail in the foregoing method embodiments. For brevity, details are not described herein again.

The processing module 1302 in the foregoing embodiment may be implemented by at least one processor or processor-related circuit. The transceiver module 1301 may be implemented by a transceiver or a transceiver-related circuit. The transceiver module 1301 may also be referred to as a communication module or a communication interface. The storage module may be implemented by at least one memory.

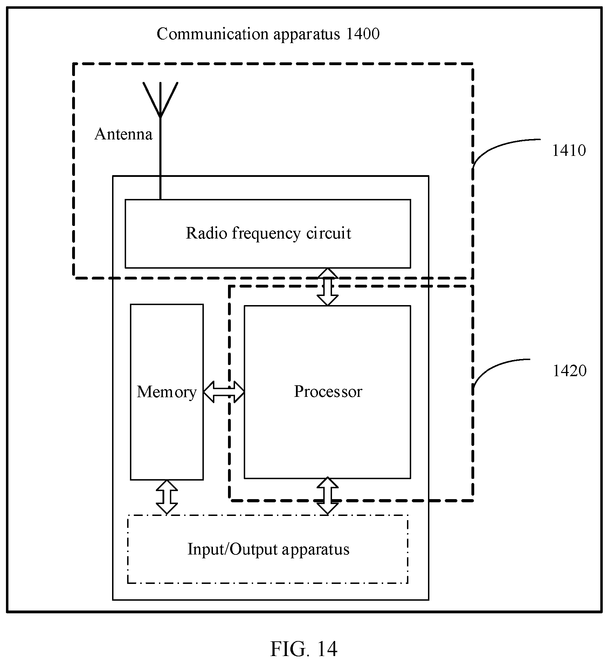

An embodiment of this application further provides a communication apparatus. FIG. 14 is a diagram of another structure of a communication apparatus according to an embodiment of this application. Refer to FIG. 14. The communication apparatus 1400 may be the terminal device in the foregoing method embodiments, or may be a component (for example, a chip), a module, or a unit in the terminal device in the foregoing method embodiments. The communication apparatus 1400 may be configured to perform an action performed by the terminal device in the foregoing method embodiments.

A processor is mainly configured to: process data or a signal, control the communication apparatus, execute a corresponding software program, process data of the software program, and the like.

It should be noted that the processor has a weak capability of implementing a signal processing algorithm, and therefore cannot implement a complex signal processing algorithm.

A memory is mainly configured to store the software program and data. A radio frequency circuit is mainly configured to: perform conversion between a baseband signal and a radio frequency signal, and process the radio frequency signal.

An antenna is mainly configured to receive and send a radio frequency signal in a form of an electromagnetic wave.

Optionally, the communication apparatus 1400 further includes an input/output apparatus, for example, a touchscreen, a display screen, or a keyboard, mainly configured to: receive data input by a user and output data to the user.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 14 shows only one memory and one processor. In an actual communication apparatus product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having receiving and sending functions and the radio frequency circuit may be considered as a transceiver unit of the communication apparatus, and the processor having a processing function may be considered as a processing unit of the communication apparatus. As shown in FIG. 14, the communication apparatus includes a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like.

Optionally, a device configured to implement a receiving function in the transceiver unit 1410 may be considered as a receiving unit, and a device configured to implement a sending function in the transceiver unit 1410 may be considered as a sending unit. In other words, the transceiver unit 1410 includes the receiving unit and the sending unit. The transceiver unit may also be referred to as a transceiver machine, a transceiver, a transceiver circuit, or the like. The receiving unit may also be referred to as a receiver machine, a receiver, a receiver circuit, or the like. The sending unit may also be referred to as a transmitter machine, a transmitter, a transmit circuit, or the like.

It should be understood that the transceiver unit 1410 is configured to perform a sending operation and a receiving operation of the terminal device in the foregoing method embodiments, and the processing unit 1420 is configured to perform an operation other than the receiving and sending operations of the terminal device in the foregoing method embodiments.

When the communication apparatus is the chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

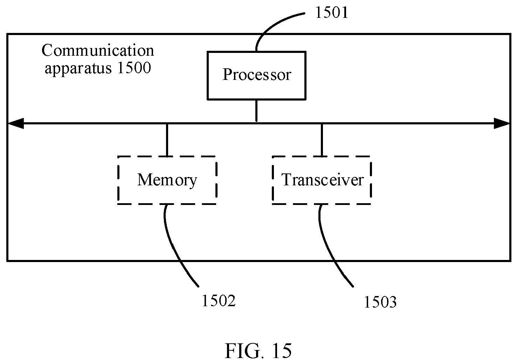

This application further provides another communication apparatus. FIG. 15 is a diagram of still another structure of a communication apparatus according to an embodiment of this application. Refer to FIG. 15. The communication apparatus 1500 includes a processor 1501.

Optionally, the communication apparatus 1500 further includes a memory 1502.

Optionally, the communication apparatus 1500 further includes a transceiver 1503.

In a possible implementation, the processor 1501, the memory 1502, and the transceiver 1503 are separately connected through a bus. The memory 1502 stores computer instructions.

In a possible implementation, when the communication apparatus 1500 includes a first access network device, or a component (for example, a chip), a module, or a unit in the first access network device, the communication apparatus 1500 may be configured to perform the steps performed by the first access network device in the foregoing method embodiments. For details, refer to related descriptions in the foregoing method embodiments.

In this implementation, the processing module 1202 in the embodiment shown in FIG. 12 may be the processor 1501, and the transceiver module 1201 in the embodiment shown in FIG. 12 may be the transceiver 1503.

In another possible implementation, when the communication apparatus 1500 includes a sensing function entity, or a component (for example, a chip), a module, or a unit in the sensing function entity, the communication apparatus 1500 may be configured to perform the steps performed by the sensing function entity in the foregoing method embodiments. For details, refer to related descriptions in the foregoing method embodiments.

In this implementation, the processing module 1302 in the embodiment shown in FIG. 13 may be the processor 1501, and the transceiver module 1301 in the embodiment shown in FIG. 13 may be the transceiver 1503.

This application further provides a communication system. The communication system includes a first access network device and a sensing function entity. The first access network device is configured to perform all or part of the steps performed by the first access network device in the foregoing method embodiments. The sensing function entity is configured to perform all or part of the steps performed by the sensing function entity in the foregoing method embodiments.

Optionally, the communication system further includes a terminal device, and the terminal device is configured to perform all or part of the steps performed by the terminal device in the foregoing method embodiments.

An embodiment of this application further provides a computer program product including computer instructions. When the computer program product runs on a computer, the computer is enabled to perform the methods in the embodiments shown in FIG. 4 to FIG. 10.

An embodiment of this application further provides a computer-readable storage medium, including computer instructions. When the computer instructions are run on a computer, the computer is enabled to perform the methods in the embodiments shown in FIG. 4 to FIG. 10.

An embodiment of this application further provides a chip apparatus, including a processor, configured to invoke a computer program or computer instructions stored in a memory, to enable the processor to perform the methods in the embodiments shown in FIG. 4 to FIG. 10.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 4 to FIG. 10. The memory mentioned in any one of the foregoing descriptions may be a read-only memory (read-only memory, ROM), another type of static storage device that can store static information and instructions, a random access memory (random access memory, RAM), or the like.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the part essentially contributing to the technical solutions of this application or all or part of the technical solutions may be implemented in a form of a software product. The computer software product is stored in a storage medium and includes a plurality of instructions for instructing a computer device (which may be a personal computer, a server, a network device, or the like) to perform all or part of the steps of the methods in embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the scope of the technical solutions in embodiments of this application.

## Claims

1. A sensing method, wherein the method is applicable to a terminal device, and the method comprises:
receiving a first identifier from a first access network device, wherein the first identifier identifies a target sensing area; and
if the terminal device supports the first identifier, performing a sensing procedure, wherein the terminal device is located in the target sensing area.

2. The method according to claim 1, wherein the first identifier further identifies a first sensing service; and the performing the sensing procedure comprises:
performing a sensing procedure corresponding to the first sensing service.

3. The method according to claim 1 or 2, wherein before the receiving the first identifier from the first access network device, the method further comprises:
receiving, from a core network device, at least one identifier supported by the terminal device, wherein each of the at least one identifier supported by the terminal device identifies a specific sensing area.

4. The method according to claim 3, wherein each of the at least one identifier further identifies a specific sensing service.

5. The method according to claim 3 or 4, wherein the receiving, from the core network device, the at least one identifier supported by the terminal device comprises:
receiving, from a unified data management entity via an access and mobility management function entity, the at least one identifier supported by the terminal device; or
receiving, from a sensing function entity, the at least one identifier supported by the terminal device.

6. The method according to any one of claims 1 to 5, wherein the method further comprises:
receiving, from the first access network device, at least one identifier supported by the first access network device; and
sending a first set to the sensing function entity, wherein the first set comprises at least one identifier supported by both the first access network device and the terminal device.

7. The method according to any one of claims 1 to 6, wherein before the receiving the first identifier from the first access network device, the method further comprises:
sending sensing capability information of the terminal device to the sensing function entity.

8. A sensing method, wherein the method is applicable to a first access network device, and the method comprises:
receiving a first sensing request from a sensing function entity, wherein the first sensing request comprises a first identifier, the first identifier identifies a target sensing area, and the first sensing request is used to request to perform a sensing procedure; and
sending the first identifier to a terminal device, wherein the terminal device is located in the target sensing area.

9. The method according to claim 8, wherein before the sending the first identifier to the terminal device, the method further comprises:
determining, based on a first mapping relationship, the target sensing area corresponding to the first identifier, wherein the first mapping relationship comprises a mapping relationship between at least one identifier supported by the first access network device and sensing area information, each of the at least one identifier identifies a specific sensing area, and the first identifier belongs to the at least one identifier.

10. The method according to claim 9, wherein each of the at least one identifier further identifies a specific sensing service.

11. The method according to claim 9 or 10, wherein the method further comprises:
receiving the first mapping relationship from a core network device.

12. The method according to any one of claims 9 to 11, wherein the first sensing request further comprises an identifier of the terminal device.

13. The method according to any one of claims 9 to 12, wherein the first identifier further identifies a first sensing service.

14. A sensing method, wherein the method is applicable to a sensing function entity, and the method comprises:
determining a first identifier, wherein the first identifier identifies a target sensing area, and the first identifier corresponds to a first access network device; and
sending a first sensing request to the first access network device, wherein the first sensing request comprises the first identifier, and the first sensing request is used to request to perform a sensing procedure.

15. The method according to claim 14, wherein the first identifier further identifies a first sensing service.

16. The method according to claim 14 or 15, wherein the determining the first identifier comprises:
receiving a second sensing request, wherein the second sensing request comprises the first identifier, and the second sensing request is used to request to perform the sensing procedure.

17. The method according to claim 14 or 15, wherein the determining the first identifier comprises:
receiving a third sensing request, wherein the third sensing request comprises area information of the target sensing area and service information of the target sensing area, and the third sensing request is used to request to perform the sensing procedure; and
determining, based on a second mapping relationship, the first identifier corresponding to both the area information of the target sensing area and the service information of the target sensing area, wherein the second mapping relationship comprises a mapping relationship between at least one identifier and a combination of area information of at least one sensing area and at least one piece of service information, and the at least one identifier is an identifier supported by an access network device in the at least one sensing area.

18. The method according to claim 17, wherein the method further comprises:
receiving the second mapping relationship from an access and mobility management function entity.

19. The method according to any one of claims 14 to 18, wherein before the sending the first sensing request to the first access network device, the method further comprises:
determining, based on a third mapping relationship, the first access network device corresponding to the first identifier, wherein the third mapping relationship comprises a mapping relationship between at least one identifier and an access network device, and the at least one identifier is an identifier supported by an access network device in the at least one sensing area.

20. The method according to claim 19, wherein the method further comprises:
receiving the third mapping relationship from the access and mobility management function entity.

21. The method according to any one of claims 14 to 20, wherein the first sensing request further comprises an identifier of a terminal device, and the terminal device is configured to perform the sensing procedure.

22. The method according to any one of claims 14 to 21, wherein before the sending the first sensing request to the first access network device, the method further comprises:
receiving a first set from the terminal device, wherein the first set comprises at least one identifier supported by both the first access network device and the terminal device.

23. The method according to any one of claims 14 to 22, wherein the method further comprises:
receiving sensing capability information from the terminal device.

24. A communication apparatus, wherein the communication apparatus comprises a transceiver module and a processing module; and
the transceiver module is configured to perform receiving and sending operations in the method according to any one of claims 1 to 7, and the processing module is configured to perform a processing operation in the method according to any one of claims 1 to 7; or
the transceiver module is configured to perform receiving and sending operations in the method according to any one of claims 14 to 23, and the processing module is configured to perform a processing operation in the method according to any one of claims 14 to 23.

25. A communication apparatus, wherein the communication apparatus comprises a transceiver module, and the transceiver module is configured to perform receiving and sending operations in the method according to any one of claims 8 to 13.

26. The communication apparatus according to claim 25, wherein the communication apparatus further comprises a processing module, and the processing module is configured to perform a processing operation in the method according to any one of claims 8 to 13.

27. A communication apparatus, wherein the communication apparatus comprises a processor, and the processor is configured to execute a computer program or computer instructions in a memory, to perform the method according to any one of claims 1 to 7, or perform the method according to any one of claims 8 to 13, or perform the method according to any one of claims 14 to 23.

28. The apparatus according to claim 27, wherein the apparatus further comprises a transceiver, and the processor and the transceiver are connected to each other through a line.

29. A computer-readable storage medium, wherein the computer-readable storage medium stores a computer program, and when the computer program is executed by an apparatus, the apparatus is enabled to perform the method according to any one of claims 1 to 7, or the apparatus is enabled to perform the method according to any one of claims 8 to 13, or the apparatus is enabled to perform the method according to any one of claims 14 to 23.

30. A communication system, wherein the communication system comprises a first access network device and a sensing function entity, the first access network device is configured to perform the method according to any one of claims 8 to 13, and the sensing function entity is configured to perform the method according to any one of claims 14 to 23.
